(19) Europäisches Patentamt / European Patent Office / Office européen des brevets

(11) **EP 3 964 639 B1**

(12) **EUROPEAN PATENT SPECIFICATION**

(45) Date of publication and mention of the grant of the patent:
**30.07.2025 Bulletin 2025/31**

(21) Application number: **21195185.0**

(22) Date of filing: **07.09.2021**

(51) International Patent Classification (IPC):
*D06F 58/26* (2006.01)     *D06F 58/38* (2020.01)
*D06F 58/02* (2006.01)     *D06F 103/02* (2020.01)
*D06F 103/32* (2020.01)     *D06F 103/44* (2020.01)
*D06F 103/52* (2020.01)     *D06F 105/28* (2020.01)
*D06F 105/48* (2020.01)     *D06F 105/52* (2020.01)

(52) Cooperative Patent Classification (CPC):
**D06F 58/26; D06F 58/38;** D06F 58/02;
D06F 2103/02; D06F 2103/32; D06F 2103/44;
D06F 2103/52; D06F 2105/28; D06F 2105/48;
D06F 2105/52; Y02B 40/00

(54) **LAUNDRY DRYING MACHINE AND CONTROLLING METHOD OF LAUNDRY DRYING MACHINE**

WÄSCHETROCKNUNGSMASCHINE UND STEUERUNGSVERFAHREN EINER WÄSCHETROCKNUNGSMASCHINE

SÈCHE-LINGE ET PROCÉDÉ DE COMMANDE D'UN SÈCHE-LINGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  07.09.2020   KR 20200113622
07.09.2020   KR 20200113623
07.09.2020   KR 20200113624

(43) Date of publication of application:
**09.03.2022 Bulletin 2022/10**

(73) Proprietor: **LG Electronics Inc.**
**Seoul 07336 (KR)**

(72) Inventors:
• **KIM, Ji Hoon**
**Seoul 08592 (KR)**
• **LEE, JungHoon**
**Seoul 08592 (KR)**
• **MOON, Chan Woo**
**Seoul 08592 (KR)**
• **KIM, Youngmin**
**Seoul 08592 (KR)**

(74) Representative: **Vossius & Partner**
**Patentanwälte Rechtsanwälte mbB**
**Siebertstraße 3**
**81675 München (DE)**

(56) References cited:
**US-A1- 2013 219 737     US-B2- 8 826 561**

**Description**

The present invention relates to a laundry drying machine and a controlling method of the laundry drying machine, and more particularly, to a laundry drying machine that generates a high frequency and dries a subject to be dried through dielectric heating, and a controlling method of the laundry drying machine.

Recently, a clothes treatment apparatus that performs a drying cycle for removing moisture from clothes has been developed. Conventional clothes treatment apparatuses supply hot air to a drum accommodating clothes to dry the clothes, thereby greatly shortening the drying time of clothes, and sterilizing and disinfecting the clothes.

However, this type of drying machine uses the heat transferred from the heated air to increase the temperature of the water contained in the clothes to induce the evaporation of water. Since heat is transferred from air with a low specific heat to water with a higher specific heat, the actual temperature rise of water is not high compared to the temperature of the heated air, and the drying performance is low compared to the power consumed.

In addition, in order for the water contained in the clothes to reach the evaporation temperature, the temperature in a drum must be at a high temperature of 100 degrees Celsius or more, so there is a problem in that the high temperature air comes into contact with the clothes, causing denaturation and damage to the clothes.

In addition, such a drying machine is also equipped with an exhaust system for discharging the water evaporated from the clothes to the outside of the drying machine. In this case, since the temperature inside the drum is inevitably lowered due to the continuous discharge of heated air, the operation time of the heater is increased, so there is a problem in that power consumption and drying time are increased.

To solve this problem, a high-frequency (RF) laundry drying machine that vibrates moisture absorbed in clothes and heats it has been developed.

In a high-frequency (RF) laundry drying machine, there is a process for rotating only the drum at 50rpm with the absent of the RF power supply in order to solve the problem of overheating when the RF power supply is used for a long period of time, and in order to evenly heat the subject to be dried by mixing the subject to be dried.

However, in this process, the subject to be dried rotates inside the drum by centrifugal force and falls due to gravity during the rotation. Accordingly, a situation in which the subject to be dried is contracted by such mechanical force occurs.

US 2013/219737 A1 relates to an apparatus, e.g., a dryer, for processing an object by RF energy applied at a plurality of excitation setups. The apparatus may include a controller configured to select one or more excitation setups, from among a plurality of pilot excitation setups, for applying RF energy to a rotating chamber; and cause a source of RF energy to apply RF energy at the one or more selected excitation setups, wherein the controller is configured to both select the one or more excitation setups and cause the source of RF energy to apply RF energy to the one or more selected excitation setups at least twice during a single rotation of the rotating chamber.

US 8 826 561 B2 relates to a method for heating a medium that includes an object having a variable weight. The method comprises (A) placing medium including an object having variable weight into a variable enclosure having adjustable dimensions; (B) initiating a heating process by subjecting the medium including the object to a variable AC electrical field; (C) substantially continuously measuring an impedance of medium including the object during the heating process; (D) adjusting dimensions of said variable enclosure to optimize the heating process; (E) adjusting parameters of the variable AC electrical field to optimize the heating process; and (F) controlling the heating process.

US 9 200 402 B2 discloses a dielectric heating type laundry drying machine.

In the drying machine, a cathode electrode and an anode electrode are rotatably provided, and when RF power of a predetermined frequency is applied, an electric field is generated to heat the moisture contained in clothes.

On the other hand, since both the cathode electrode and the anode electrode are provided in a rotating form, the drum must be essentially stopped in order to form a constant electric field.

However, when the internal temperature of the subject to be dried rapidly increases as described above, there is a problem in that local overheating occurs inside the subject to be dried. In particular, when the subject to be dried is a dyed synthetic fiber, there is a problem in that color transfer occurs due to local overheating. In the case of synthetic fibers, if the temperature exceeds 50 degrees Celsius, there is a possibility of color transfer.

Meanwhile, US 9 447 537 B2 discloses a laundry drying machine that uses an electrode to dielectrically heat the subject to be dried.

In the above prior art, an anode electrode is fixed, and a drum serving as a cathode electrode is provided in a rotatable state.

When a drying process is started in the above prior art, RF power is applied to the anode electrode while the drum is stopped. Impedance matching is easy when the drum is stopped, and after the impedance matching, continuous heating is possible, which is effective in heating the moisture contained in the subject to be dried at a high speed.

However, even in this case, there is a problem in that the internal temperature of the subject to be dried rapidly rises, resulting in local overheating.

In this case, after heating the subject to be dried for 90 seconds to prevent local overheating inside the clothes, the RF current supply is stopped and the drum is rotated for 5 seconds to mix the subject to be dried.

However, in this method, since dielectric heating is performed again in a state in which the heat inside the subject to be dried is not sufficiently discharged, there is an issue that the internal temperature of the subject to be dried continuously increases as the drying cycle proceeds.

In addition, in this method, a matcher must match the impedance for less than 7 seconds in order to supply RF power again, and during this process, power consumption may occur, so that there is an issue that the overall drying time is increased.

In addition, in the case of heating after sufficiently discharging internal heat, the energy and time required for performing dielectric heating again are large, so there is a problem in that the drying efficiency is decreased.

In addition, in the process of mixing the subject to be dried, the falling motion of the subject to be dried may occur due to the centrifugal force of the drum, and the clothes may be shrunk.

On the other hand, Korean Patent Laid-Open Patent KR2018-0085201A discloses a drying machine that performs both RF drying and hot air drying.

In such a drying machine, a cathode electrode and an anode electrode are rotatably provided, and when RF power of a predetermined frequency is applied, an electric field is generated to heat the moisture contained in clothes. Therefore, the drum must be essentially stopped in order to form a constant electric field.

Accordingly, the drying machine also stops the drum for heating and repeats the operation of rotating the drum to prevent local overheating of the clothes, thereby increasing energy consumption and drying time.

The drying machine may perform hot air drying while rotating the drum in order to solve the problem of increasing the drying time. However, when both dielectric heating and hot air drying are performed, power consumption may be very large.

In addition, while the inside of the subject to be dried is heated by the dielectric heating, the outside of the subject to be dried is also heated by the hot air drying, thereby causing damage to the subject to be dried.

Therefore, there is a need to develop a technology capable of minimizing energy consumption while shortening the drying time.

On the other hand, Korean Patent Laid-Open Patent KR2007-0056287A discloses a hot air type drying machine. In the drying machine, the drum was constantly rotated at 50 rpm so that hot air is uniformly supplied to the subject to be dried during the drying process.

In this case, the subject to be dried is rotated by centrifugal force and moved upwards inside the drum, and is dropped by gravity. In this case, the drying performance may be increased by increasing the contact area with the hot air while the subject to be dried is falling, but there is an issue that the subject to be dried is shrunk.

The present invention is invented to improve the problems of the conventional laundry drying machine and the control method of the laundry drying machine as described above, and the object of the present invention is to provide a laundry drying machine and a control method of the laundry drying machine that can prevent the occurrence of color transfer in a subject to be dried.

Another object of the present invention is to provide a laundry drying machine and a method for controlling the laundry drying machine that can prevent local overheating of a subject to be dried.

Another object of the present invention is to provide a laundry drying machine and a control method of the laundry drying machine that can heat a subject to be dried accommodated in a drum in a dielectric heating type drying machine while rotating the drum.

Another object of the present invention is to provide a laundry drying machine and a control method of the laundry drying machine that can increase drying efficiency in a dielectric heating type drying machine that consumes a lot of energy and time required for dielectric heating.

Another object of the present invention is to provide a laundry drying machine and a method for controlling the laundry drying machine that can minimize energy consumption in a drying process.

Another object of the present invention is to provide a laundry drying machine and a control method of the laundry drying machine that can prevent the occurrence of color transfer of a subject to be dried regardless of the size of the laundry drying machine.

Another object of the present invention is to provide a laundry drying machine and a method for controlling the laundry drying machine that can prevent damage to an equipment such as a matcher due to the generation of reflected waves according to the rotation of a drum.

Another object of the present invention is to provide a laundry drying machine and a control method of the laundry drying machine that can save time and energy required for impedance matching.

Another object of the present invention is to provide a laundry drying machine and a control method of the laundry drying machine that can prevent a subject to be dried from falling in the process of mixing the subject to be dried.

Another object of the present invention is to provide a laundry drying machine and a method for controlling the laundry drying machine that can reduce the shrinkage of a subject to be dried and provide a degree of shrinkage similar to that of natural drying.

[Technical Solution]

In order to achieve the above objects, the laundry drying machine according to the present invention includes a cabinet; a drum that is rotatably installed in the cabinet to accommodate a subject to be dried; an electric field generator that is spaced apart from the drum and generates an electric field inside the drum when power is applied; and an exhaust duct to discharge the air inside the drum.

The electric field generator includes an anode electrode that is spaced apart from the drum, fixed to the cabinet, and applies the electric field to the subject to be dried accommodated in the drum.

The electric field generator further includes a power supply unit that supplies the power to the anode electrode

The electric field generator further includes a matcher that is provided in the cabinet and matches a source impedance of the power and an impedance of a load side.

The drum is configured to reduce a rotation speed of the drum when a reflectivity of the electric field exceeds a predetermined ratio.

In this case, the drum may rotate while the power is applied to the anode electrode.

The electric field generator increases the power applied to the anode electrode when the reflectivity of the electric field is less than or equal to a predetermined ratio.

The rotation rate of the drum may be reduced by 10% when the reflectivity of the electric field exceeds a predetermined ratio.

The electric field generator may apply the power corresponding to a preset start power to the anode electrode when starting to apply power to the anode electrode, and the electric field generator may apply the power corresponding to 20% of the preset drying power when the reflectivity of the electric field is less than or equal to a predetermined ratio.

The electric field generator may apply the power corresponding to 50% of the drying power to the anode electrode when the power being applied to the anode electrode corresponds to 20% of the drying power and the reflectivity of the electric field is less than or equal to a predetermined ratio.

The electric field generator may apply the power corresponding to 100% of the drying power to the anode electrode when the power being applied to the anode electrode corresponds to 50% of the drying power and the reflectivity of the electric field is less than or equal to a predetermined ratio.

The drum may maintain the rotation speed when a preset drying power is applied to the anode electrode and the reflectivity of the electric field reflected from the subject to be dried is less than or equal to a predetermined ratio.

The drum may rotate when power is applied to the anode electrode.

The drum may rotate at a predetermined drying rotation speed while the power is applied to the anode electrode, and the drum may rotate at a predetermined agitating rotation speed when the power supply to the anode electrode is stopped.

The drying rotation speed may be smaller than the agitating rotation speed.

The anode electrode may be formed in an arc shape enclosing a predetermined angle range with the rotation axis of the drum as the origin.

In this case, the drum may rotate at a rotational speed of $12/5\pi$ times or more and 7 rpm or less of an angle (rad) at which the anode electrode is formed while power is applied to the anode electrode.

The drum may include a drum body that is formed in a cylindrical shape and accommodates the subject to be dried therein; and a notch part that is connected to the drum body and curved inwardly from an outer circumferential surface of the drum body.

The notch part may include a connection part that is formed in an annular shape and connected to the drum body; and an anode electrode receiving part that is curved inwardly in the radial direction at the connection part and forms a space for accommodating the anode electrode.

The anode electrode may be spaced apart from the notch part at a predetermined interval, and may be formed in a circular arc shape concentric with the notch part.

The matcher may continuously match the source impedance of the power and the impedance of the load side while the drum rotates at the drying rotation speed.

The laundry drying machine according to an embodiment of the present invention may further include a drum motor that provides a driving force to rotate the drum; and a control unit that is disposed inside the cabinet and controls the drum motor and the electric field generator.

In this case, the control unit may simultaneously operate the matcher and the drum motor.

The control unit may measure the temperature of the subject to be dried and operate the drum motor to maintain the temperature of the subject to be dried at 50 degrees Celsius or less.

The drum may further include at least one lifter that is provided on an inner circumferential surface of the drum body and formed to protrude toward the center of the drum body.

The lifter may contact the subject to be dried at least once while power is applied to the anode electrode.

The drum may be rotated at a preset agitating rotation speed in a state in which power supply to the anode electrode is stopped, and the agitating rotation speed may be more than 0, less than 50 rpm.

In this case, the value obtained by multiplying the radius of the drum and the square of the agitating rotation speed (rad/s) may be 0.27 times or less of the magnitude of the gravitational acceleration.

The drum may rotate at a preset drying rotation speed when power is applied to the anode electrode.

The agitating rotation speed may be greater than the drying rotation speed.

The agitating rotation speed may be greater than 0, 30rpm or less.

Accordingly, the subject to be dried may slide along the inner circumferential surface of the drum when the drum rotates at a preset agitating rotation speed.

In order to achieve the above objects, in the control method of the laundry drying machine including a cabinet, a drum to accommodate a subject to be dried and an anode electrode spaced apart from the drum, fixed to the cabinet, to generate an electric field in the drum, the control method of the laundry drying machine according to the present invention may include a drying step of applying power to the anode electrode and rotating the drum at a preset drying rotation speed for a preset drying time; and an agitating step of cutting off the power applied to the anode electrode and rotating the drum, wherein in the drying step, a rotation speed of the drum is reduced when a reflectivity of the electric field exceeds a predetermined ratio.

The power applied to the anode electrode is increased when the reflectivity of the electric field is less than or equal to the predetermined ratio.

The drying step may include a drying entry step of applying a preset start power to the anode electrode and rotating the drum at a preset start rotation speed; and a rotation maintaining step of applying a preset drying power to the anode electrode and maintaining the rotation speed of the drum.

In the drying step, when the reflectivity of the electric field exceeds a predetermined ratio after the drying entry step, the rotation speed of the drum may be reduced.

The drying step may further include a first power increasing step of increasing the power applied to the anode electrode to 20% of the drying power when the reflectivity of the electric field is less than or equal to a predetermined ratio after the drying entry step.

In the drying step, when the reflectivity of the electric field exceeds a predetermined ratio after the first power increasing step, the rotation speed of the drum may be reduced.

The drying step may further include a second power increasing step of increasing the power applied to the anode electrode to 50% of the drying power when the reflectivity of the electric field is less than or equal to a predetermined ratio after the first power increasing step.

In the drying step, when the reflectivity of the electric field exceeds a predetermined ratio after the second power increasing step, the rotation speed of the drum may be reduced.

The drying step may further include a third power increasing step of increasing the power applied to the anode electrode to the drying power when the reflectivity of the electric field is less than or equal to a predetermined ratio after the second power increasing step.

In the drying step, when the reflectivity of the electric field exceeds a predetermined ratio after the third power increasing step, the rotation speed of the drum may be reduced

The drying rotation speed in the drying step and the agitating rotation speed may be different.

The drying rotation speed in the drying step may be smaller than the agitating rotation speed.

In the drying step, the drum may be rotated and the matcher may be operated to continuously match the source impedance of the power and the impedance of the load side.

In the drying step, the drying time may be 80 seconds or more and 100 seconds or less.

In the agitating step, the agitating time may be 3 seconds or more and 7 seconds or less.

The control method of the laundry drying machine according to the present invention may further include a load sensing step of rotating the drum to sense the load of the subject to be dried before the drying step.

The drying rotation speed in the drying step may be slower than the rotation speed of the drum in the load sensing step.

In the drying step, the drying rotation speed may be set in proportion to an angle range in which the anode electrode in the arc shape is disposed with the rotation axis of the drum as the origin.

In the drying step, the drying rotation speed may be $12/5\pi$ times or more of the angle (rad) at which the anode electrode in the arc shape is disposed with respect to the rotation axis of the drum as the origin.

In the drying step, the drying rotation speed may be more than 0 and 7 rpm or less.

In the agitating step, the drum rotated at a preset agitating rotation speed, the agitating rotation speed may be greater than 0, 30 rpm or less.

The square of the agitating rotation speed may be set in inverse proportion to the radius of the drum.

The value obtained by multiplying the radius of the drum and the square of the agitating rotation speed (rad/s) may be 0.27 times or less of the magnitude of the gravitational acceleration.

In the agitating step, the drum is rotated for a preset agitating time, and the agitating time may be 3 seconds or more and 7 seconds or less.

In the drying step, the drum may be rotated at a preset drying rotation speed, and the drying rotation speed may be smaller than the agitating rotation speed.

In the drying step, the drying rotation speed may be greater than 0, and 7 rpm or less.

The control method of the laundry drying machine according to the present invention may further include a load sensing step of rotating the drum to sense the load of the subject to be dried before the drying step.

In this case, in the load sensing step, the drum may rotate at the agitating rotation speed.

[Advantageous Effect]

As described above, according to the laundry drying machine and the control method of the laundry drying machine according to the present invention, there is an effect of preventing the occurrence of color transfer in a subject to be dried by maintaining the internal temperature of the subject to be dried at 50 degrees or less.

In addition, there is an effect of preventing local overheating of a subject to be dried while the subject to be dried is mixed by the rotation of a drum.

In addition, there is an effect that a subject to be dried accommodated in a drum can be heated while the drum rotates in a dielectric heating type drying machine in which the drum rotates a low speed in a state in which an anode electrode is fixed.

In a dielectric heating type drying machine that consumes a lot of energy and time required for dielectric heating, there is an effect of increasing drying efficiency by rotating a drum even in a state in which power is applied to an anode electrode.

In addition, there is an effect that can minimize energy consumption by minimizing the rotation speed of a drum in a drying process and agitation calibration.

In addition, there is an effect of preventing color transfer of a subject to be dried regardless of the size of a laundry drying machine by presenting a minimum rotation speed of a drum in proportion to an angle surrounding an anode electrode and the drum.

In addition, there is an effect of preventing damage to an equipment such as a matcher due to a reflected wave by controlling a rotation speed of a drum and RF power to lower a reflectivity of an electric field.

In addition, since a drying process can be started immediately without a separate impedance matching time, there is an effect of saving time and energy required for impedance matching.

In addition, there is an effect that a subject to be dried can slide along an inner circumferential surface of a drum without falling in the process of mixing the subject to be dried by setting a rotation speed range of the drum.

In addition, there is an effect of reducing the shrinkage of a subject to be dried due to mechanical force by preventing the falling motion of the subject to be dried.

[Description of Drawings]

FIG. 1 is a view for explaining the external appearance of a laundry drying machine according to an embodiment of the present invention.

FIG. 2 is a view of FIG. 1 viewed from another angle.

FIG. 3 is a cross-sectional view taken along line A-A in FIG. 2.

FIG. 4 is a cross-sectional view taken along line B-B in FIG. 2.

FIG. 5 is a partially enlarged view of part A of FIG. 4.

FIG. 6 is a view of a state in which a front panel, an upper panel, and a side panel are disassembled in a laundry drying machine according to an embodiment of the present invention.

FIG. 7 is a rear view of a state in which a rear panel is disassembled in a laundry drying machine according to an embodiment of the present invention.

FIG. 8 is a front view of a state in which a cabinet is disassembled in a laundry drying machine according to an embodiment of the present invention.

FIG. 9 is a front view of a partially disassembled state of a notch part in a laundry drying machine according to an embodiment of the present invention.

FIG. 10 is a front view for explaining an electric field generator in a laundry drying machine according to an embodiment of the present invention.

FIG. 11 is a perspective view illustrating an electric field generator in a laundry drying machine according to an embodiment of the present invention.

FIG. 12 is a block diagram for explaining a control configuration in a laundry drying machine according to an embodiment of the present invention.

FIG. 13 is a flowchart illustrating a procedure according to a control method of a laundry drying machine according to an embodiment of the present invention.

FIG. 14 is a graph showing a change in temperature of a subject to be dried in a conventional dielectric heating type laundry drying machine.

FIG. 15 is a graph showing a change in a temperature of a subject to be dried when a control method of a laundry drying machine according to an embodiment of the present invention is applied.

FIG. 16 is a flowchart for explaining a process of controlling a rotation speed of a drum and RF power for impedance matching during a drying process in a control method of a laundry drying machine according to an embodiment of the present invention.

FIG. 17 is a graph showing a difference in shrinkage rate according to time when a control method of a laundry drying machine according to an embodiment of the present invention is applied.

Hereinafter, preferred embodiments of the present invention will be described in detail with reference to the accompanying drawings.

Since the present invention can have various changes and various embodiments, specific embodiments are illustrated in the drawings and will be described in detail in the detailed description. This is not intended to limit the present invention to specific embodiments, and should be construed to include all modifications and substitutes included in the scope of the present invention.

In describing the present invention, terms such as first, second, etc. may be used to describe various components, but the components may not be limited by the terms. The above terms are only for the purpose of distinguishing one component from another. For example, without departing from the scope of the present invention, a first component may be referred to as a second component, and similarly, a second component may also be referred to as a first component.

The term "and/or" may include a combination of a plurality of related listed items or any of a plurality of related listed items.

When a component is referred to as being "connected" or "contacted" to another component, it may be directly connected or contacted to the other component, but it may be understood that other components may exist in between. On the other hand, when an element is referred to as being "directly connected" or "directly contacted" to another element, it may be understood that the other element does not exist in the middle.

The terms used in the present application are only used to describe specific embodiments, and are not intended to limit the present invention. The singular expression may include the plural expression unless the context clearly dictates otherwise.

In the present application, terms such as "comprise" or "have" are intended to designate that a feature, number, step, operation, component, part, or combination thereof described in the specification exists, and it may be understood that it does not preclude in advance the possibility of the presence or addition of one or more other features or numbers, steps, operations, components, parts, or combinations thereof.

Unless defined otherwise, all terms used herein, including technical or scientific terms, may have the same meaning as commonly understood by one of ordinary skill in the art to which this invention belongs. Terms such as those defined in a commonly used dictionary may be interpreted as having a meaning consistent with the meaning in the context of the related art, and unless explicitly defined in the present application, it may not be construed in an ideal or overly formal meaning.

In addition, the following embodiments are provided to more completely explain to those of ordinary skill in the art, and the shapes and sizes of elements in the drawings may be exaggerated for clearer explanation.

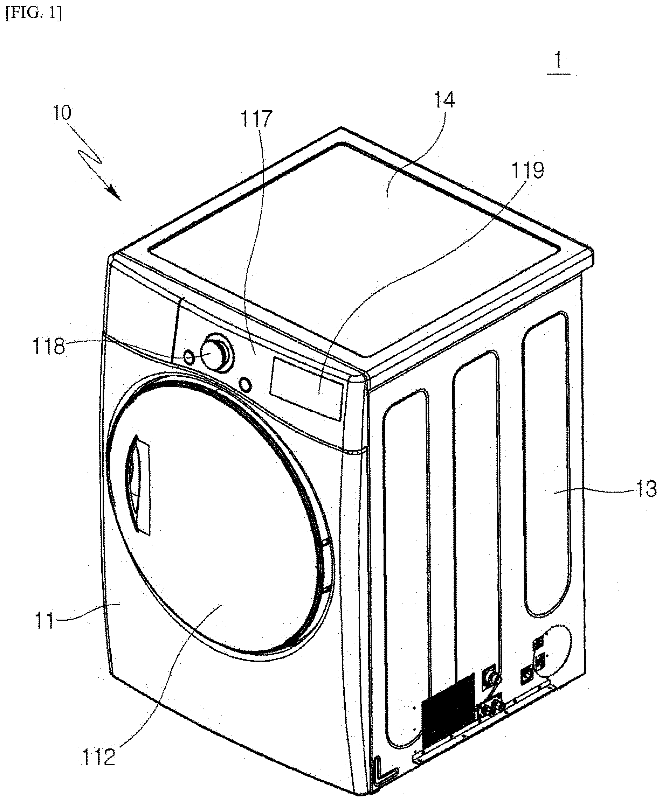

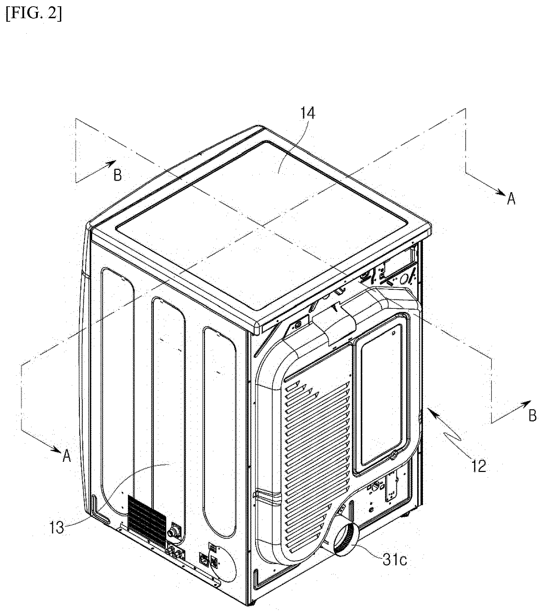

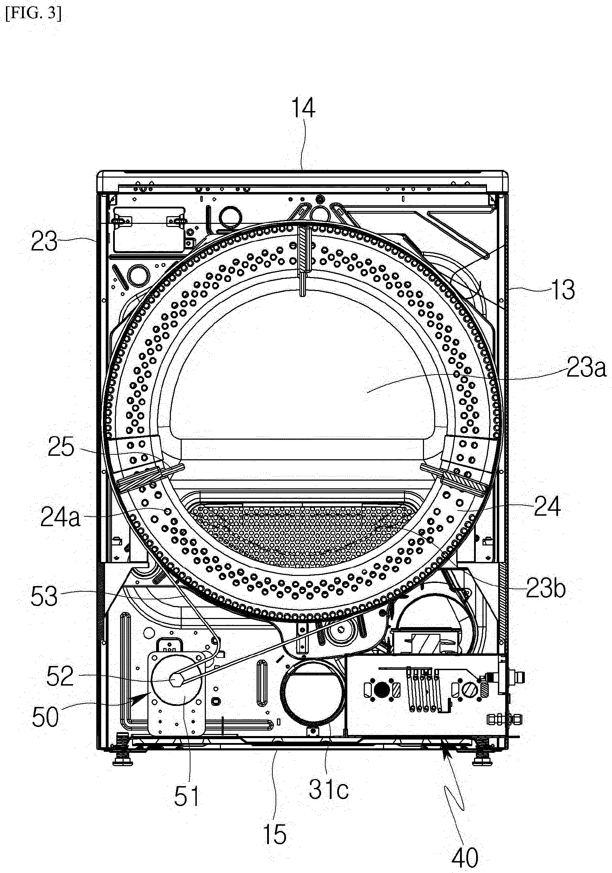

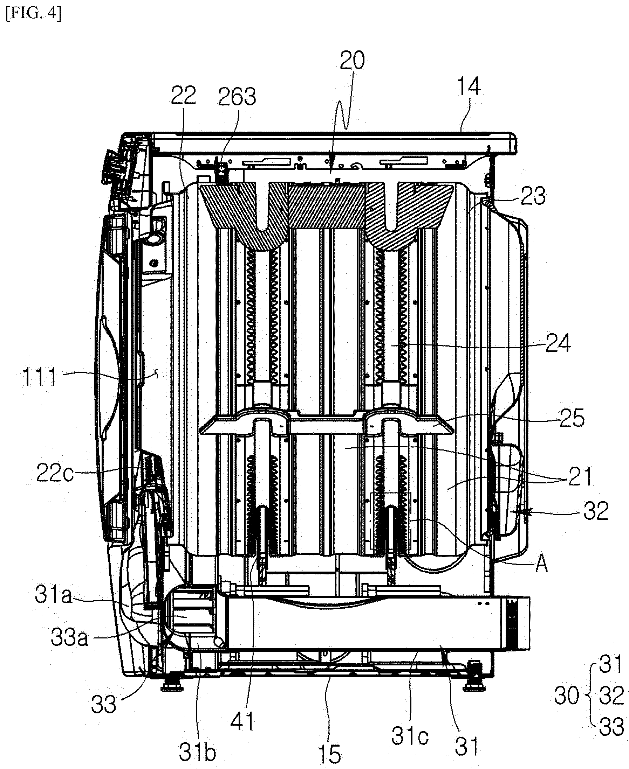

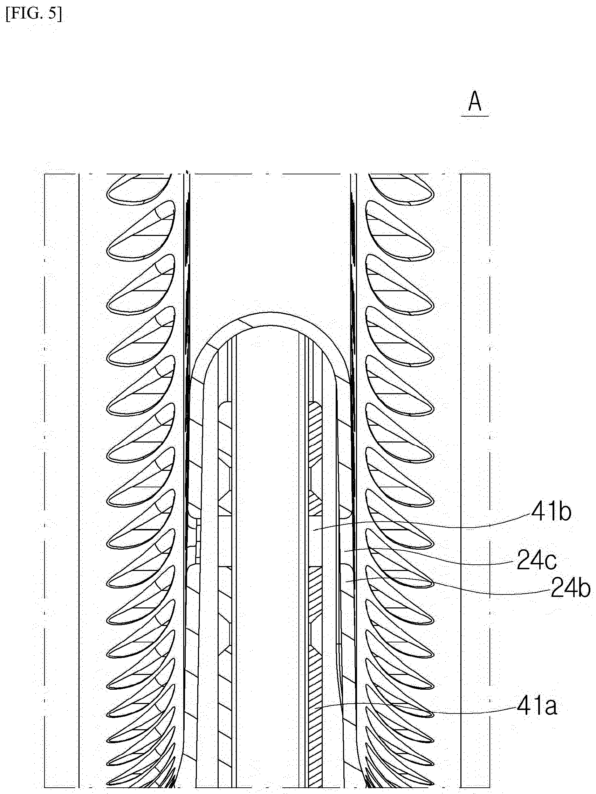

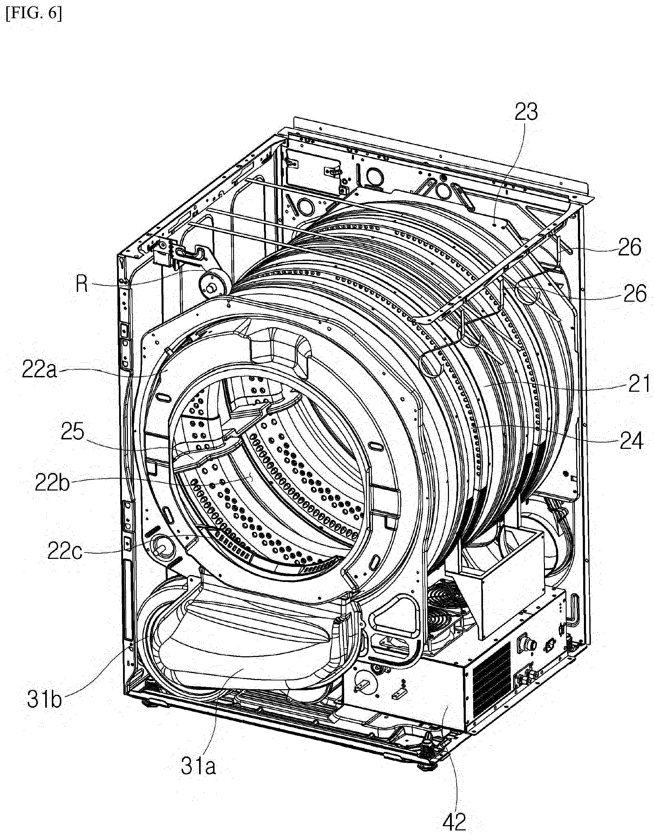

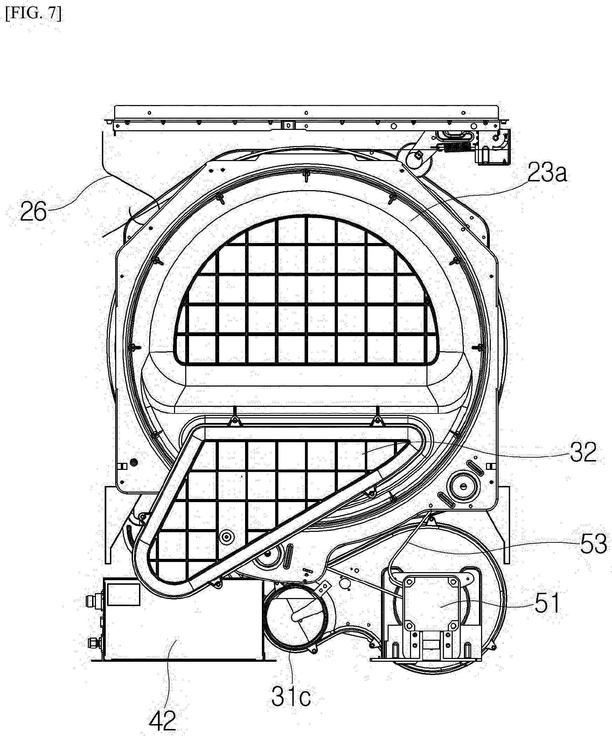

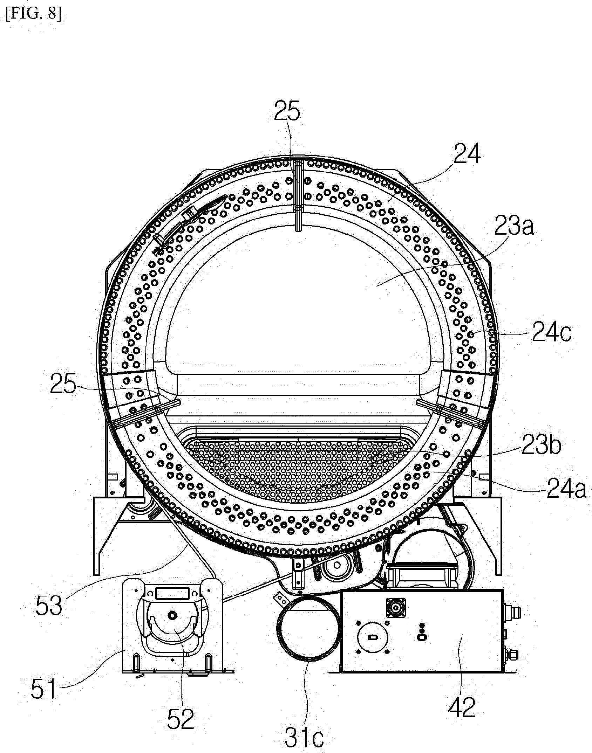

FIG. 1 shows a view for explaining the external appearance of a laundry drying machine according to an embodiment of the present invention, FIG. 2 shows a view of FIG. 1 viewed from another angle, FIG. 3 shows a cross-sectional view taken along line A-A in FIG. 2, FIG. 4 shows a cross-sectional view taken along line B-B in FIG. 2, FIG. 5 shows a partially enlarged view of the part A in FIG. 4, FIG. 6 shows a view of a state in which a front panel, an upper panel, and a side panel are disassembled in a laundry drying machine according to an embodiment of the present invention, FIG. 7 shows a rear view of a state in which a rear panel is disassembled in a laundry drying machine according to an embodiment of the present invention, FIG. 8 shows a front view of a state in which a cabinet is disassembled in a laundry drying machine according to an embodiment of the present invention.

As shown in FIGS. 1 to 8, a cabinet 10 forming the outer body of a laundry drying machine 1 includes a front panel 11 constituting the front surface, a rear panel 12 constituting the rear surface, a pair of side panels 13 constituting a side surface, an upper panel 14 constituting an upper surface, and a lower panel 15 constituting a lower surface of the laundry drying machine 1.

The front panel 11 may be provided with an inlet 111 provided to communicate with a drum 20 to be described later and a door 112 rotatably coupled to the cabinet 10 to open and close the inlet 111.

A control panel 117 is provided on the front panel 11.

The control panel 117 may be provided with an input unit 118 to receive a control command from a user, a display unit 119 to output information such as the control command selectable by the user, and a main control unit (not shown) to control a command for performing the operation of the laundry drying machine 1.

On the other hand, the input unit 118 may be configured to include a power supply request unit to request power supply to the laundry drying machine, a course input unit to allow a user to select a desired course among a plurality of courses, an execution request unit to request the start of the course selected by the user, and the like.

The display unit 119 may be configured to include at least one of a display panel capable of outputting characters and/or figures, and a speaker capable of outputting a voice signal and sound. The user can easily grasp the status of a current administrative status, a remaining time, and the like through the information output through the display unit 119. Inside the cabinet 10, a drum 20 that is rotatably provided and provides a space for accommodating clothes (a subject to be dried), a duct part 30 that supplies air to the drum 20 and exhausts the air inside the drum 20, and an electric field generator 40 that forms an electric field inside the drum 20 are provided.

The drum 20 may include a cylindrical drum body 21 having an open front surface, a first support part 22 rotatably supporting the front surface of the drum body 21 inside the cabinet 10, and a second support part 23 rotatably supporting the rear surface of the drum body 21. The inner space of the drum 20 functions as a drying chamber in which drying is performed. On the other hand, the drum 20 of the present invention may serve as a cathode electrode of a capacitor.

The first support part 22 may be configured to include a first fixed body 22a fixed to the inside of the cabinet 10 and a drum inlet 22b that is provided to penetrate the first fixed body 22a to communicate the inlet 111 and the inside of the drum body 21.

The first fixed body 22a may be provided with an air outlet 22c communicating with the duct part 30.

As shown in FIG. 2, the air outlet 22c is a passage that allows the internal air of the drum body 21 to move to the duct part 30, and may be provided as a through hole provided to pass through the first fixed body 22a.

The second support part 23 is configured to include a second fixed body 23a fixed to the inside of the cabinet 10.

An air inlet 23b that is provided to pass through the second fixed body 23a and communicates the inside of the drum body 21 with the inside of the cabinet 10 is formed in the second support part 23.

The outer circumferential surface of the drum body 21 may include one or more notch parts 24 that are recessed along the circumferential direction. In this case, an anode electrode 41 to be described later may be spaced apart from each other at a predetermined interval in the notch part 24.

The specific structure of the drum 20 will be described later in detail.

The cylindrical drum body 21 may rotate through various types of driving units 50.

For example, FIG. 3 illustrates an embodiment in which the driving unit 50 includes a drum motor 51 fixed inside the cabinet 10, a pulley 52 rotating by the drum motor 51, a belt 53 connecting the circumferential surface of the pulley 52 and the circumferential surface of the drum body 21.

In this case, the side panel 13 may be provided with a roller R for rotatably supporting the circumferential surface of the drum body 21.

However, the present invention is not limited thereto, and a direct driven type driving unit in which the drum motor 51 is directly connected to the drum to rotate the drum without going through a pulley and a belt is also applicable, which also falls within the scope of the present invention. For convenience, the following description will be based on the illustrated embodiment of the driving unit 50.

The duct part 30 includes an exhaust duct 31 connected to the air outlet 22c and a supply duct 32 connected to the air inlet 23b.

The exhaust duct 31 may be a passage for exhausting the air inside the drum body 21 to the outside of the cabinet 10. Accordingly, the water vapor generated from a subject to be dried may be exhausted to the outside of the cabinet 10 by the flow force of a circulation fan 33.

The exhaust duct 31 includes an air suction pipe 31a, a fan housing 31b, and an exhaust pipe 31c.

The air suction pipe 31a is formed to communicate with the air outlet 22c, and may be a passage for guiding the air inside the drum 20 to the outside. In detail, the air suction pipe 31a may provide a flow path formed from the air outlet 22c downward in the gravity direction. For example, the air suction pipe 31a may be a pipe having a flat shape in the front-rear direction. In this case, the lower surface of the air suction pipe 31a may be inclined at a predetermined angle with the ground. In this configuration, the water that has passed through the air outlet 22c and then condensed on the inner surface of the air suction pipe 31a can be flowed down by its own weight and collected, and discharged to the outside of the laundry drying machine 1 by the flow force of the circulation fan 33, which will be described later. Accordingly, it is possible to prevent moisture from accumulating inside the air suction pipe 31a, thereby preventing the propagation of bacteria and the like.

The fan housing 31b is formed to communicate with the air suction pipe 31a, and is formed in a cylindrical shape to accommodate the impeller 33a of the circulation fan 33, which will be described later. Accordingly, the air passing through the air suction pipe 31a may flow by the rotation of the impeller 33a and be exhausted to the outside of the laundry drying machine 1.

One side of the exhaust pipe 31c may be formed to communicate with the fan housing 31b, and the other side may be disposed outside the laundry drying machine 1 through the rear panel 12. With this configuration, the air discharged from the fan housing 31b may be exhausted to the outside of the laundry drying machine 1 through the exhaust pipe 31c.

In addition, the duct part 30 may include the circulation fan 33 to move air along the exhaust duct 31. The circulation fan 33 is provided to include the impeller 33a provided in the exhaust duct 31, and an impeller motor 33b to rotate the impeller 33a, and provides a flow force to the air moving along the exhaust duct 31. For example, the impeller 33a may be accommodated in the fan housing 31b of the exhaust pipe 31c to provide the flow force to the air.

The supply duct 32 may be a passage for guiding the air outside the drum body 21 into the drum body 21. The supply duct 32 may communicate with the air inlet 23b to communicate the inside of the cabinet 10 with the drum body 21. With this configuration, when the circulation fan 33 is driven to generate a negative pressure inside the drum body 21, the air outside the drum body 21 passes through the supply duct 32, passes through the air inlet 23b, and can be introduced to the inside the drum body 21.

Meanwhile, the air flowing inside the drum 20 may be indoor air, heated air, or a combination of both.

The electric field generator 40 may be various devices capable of generating an electric field inside the drum 20. For example, the electric field generator 40 may be a device that vibrates water molecules by using the electric field generated between the anode electrode and the cathode electrode for heating (dielectric heat) and evaporating.

Specifically, the electric field generator 40 includes an anode electrode 41 that forms an electric field with respect to the drum 20 serving as a cathode electrode.

The specific shape of the anode electrode 41 will be described later.

The electric field generator 40 includes a matcher 42 connected to the anode electrode 41 to supply a current of a predetermined frequency to the anode electrode 41. The matcher 42 may be supported by being coupled to the lower panel 15.

The matcher 42 may be electrically connected to the anode electrode 41 to adjust the induction coefficient or capacitance to be tuned to a predetermined frequency. In addition, the matcher 42 may match the source impedance of the high frequency power with the impedance of load side. The matcher 42 may include a variable inductor and a variable capacitor. As for the detailed configuration of the matcher 42, any means known in the art can be applied, and a description of the detailed configuration will be omitted.

Meanwhile, the matcher 42 may include a heat sink (not shown) and a cooling fan. With this configuration, the air inside the cabinet 10 can recover heat while passing through the heat sink, and the cooling fan can make the heated air to be introduced into the cabinet 10, and the heated air can be introduced again into the drum 20 to support drying of the subject to be dried.

The electric field generator 40 includes a power supply unit 43 electrically connected to the matcher 42 to supply power.

The power supply unit 43 is electrically connected to the matcher 42 to supply a constant frequency current to the anode electrode 41. Accordingly, when power is applied to the anode electrode 41, an electric field may be generated in the drum 20.

In this embodiment, the power supply unit 43 may mean RF power. The drum 20 is connected to the power supply unit 43 of fixed frequency by the matcher 42 together with the control unit 100 to measure an appropriate power, drying, load size, and time setting for drying end and to perform the drying process. In this case, the preferred operation frequency of the power source 21 is in the range of 1 MHz to 50 MHz.

RF power supply by the power supply unit 43 may be applied when the subject is be dried is tumbled and/or stopped.

The drying process for the subject to be dried will be described later.

In addition, the laundry drying machine 1 according to the present invention may further include a filter unit F as a means for removing foreign substances such as lint and dust generated in the drying process of laundry such as clothes.

As for the detailed configuration of the filter unit F, any means known in the art may be applied, and the description of the detailed configuration will be omitted.

The electric field generator 40 may be directly controlled by the control unit 100.

The control unit 100 is configured to control the operation of the laundry drying machine 1 based on a user input applied through the input unit 118. The control unit 100 may be composed of a printed circuit board and elements mounted on the printed circuit board.

When the user inputs a control command such as selecting a clothes treatment course or operation of the laundry drying machine 1 through the input unit 118, the control unit 100 may control the operation of the laundry drying machine 1 according to a preset algorithm. Specific control contents of the control unit 100 in the present invention will be described later.

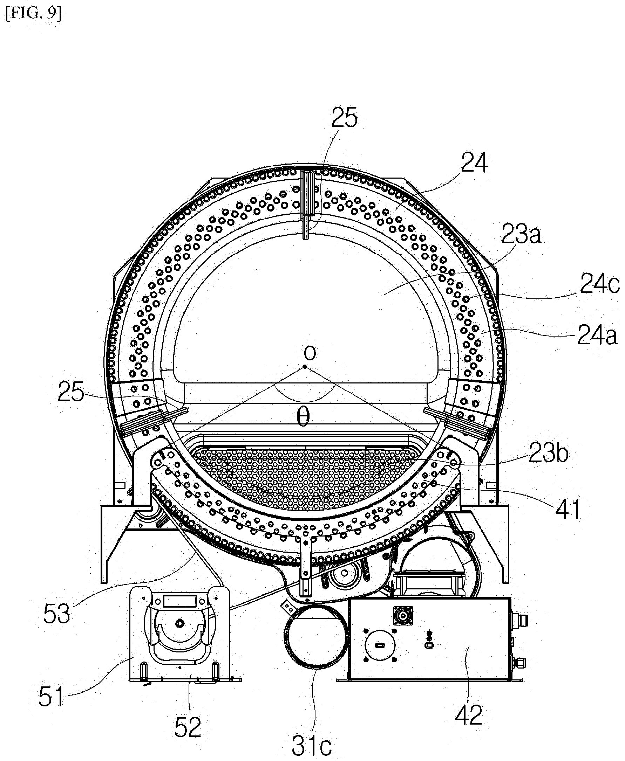

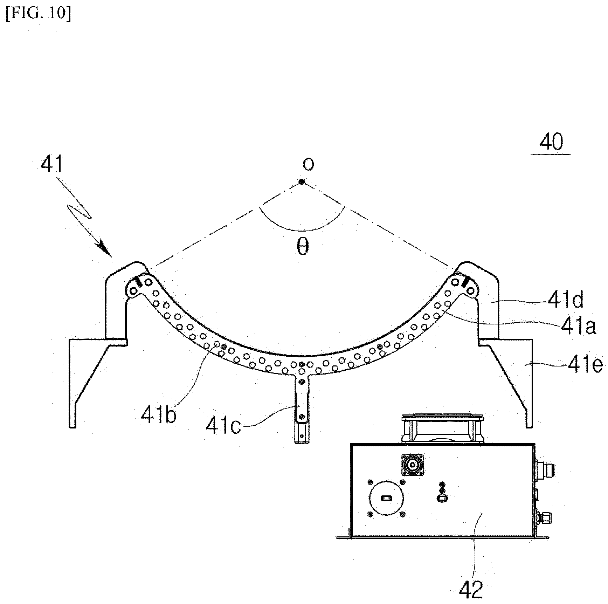

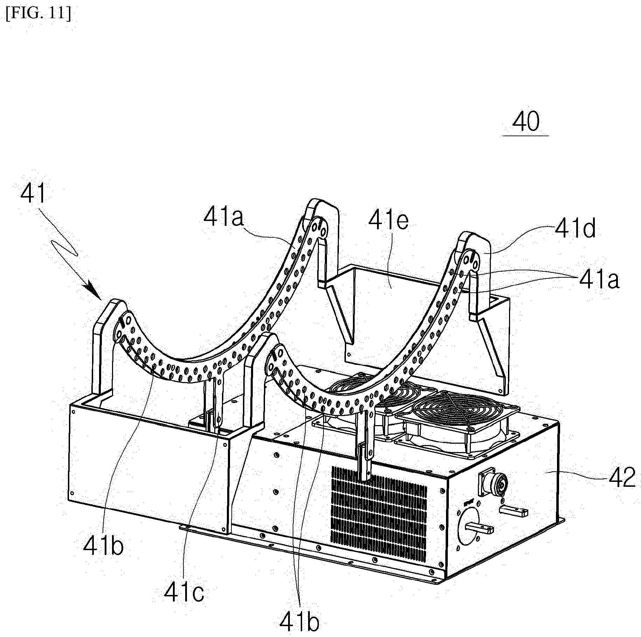

FIG. 9 is a front view of a partially disassembled state of the notch part 24 in the laundry drying machine according to the embodiment of the present invention, and FIG. 10 is a front view for explaining the electric field generator in the laundry drying machine according to the embodiment of the present invention. FIG. 11 is a perspective view for explaining the electric field generator in the laundry drying machine according to an embodiment of the present invention.

The configuration of the anode electrode 41 and the drum 20 in the laundry drying machine 1 according to the embodiment of the present invention will be described with reference to FIGS. 4, 5 and 9 to 11.

The drum 20 may include the drum body 21, the first support part 22, the second support part 23, the notch part 24, a lifter 25, and the ground electrode 26. Meanwhile, detailed descriptions of the first support part 22 and the second support part 23 will be omitted to avoid redundant description of the above description.

The drum body 21 is formed in a hollow shape so that the subject to be dried can be accommodated in the inner space. That is, the drum body 21 may be formed in a cylindrical shape or a ring shape.

The notch part 24 is formed in a ring shape, and is connected to the drum body 21 to rotate integrally.

In this case, the drum body 21 is made of a plurality and may be coupled to the notch part 24, or may be integrally formed with the notch part 24.

Specifically, the notch part 24 may be formed by indenting a portion of the outer circumferential surface of the cylindrical drum body 21 inward in a radial direction.

Specifically, the notch part 24 may include a connection part 24a that is formed in an annular shape and connected to the drum body 21 and an anode electrode receiving part 24b that is curved inwardly in the radial direction at the connection part 24a and forms a space for accommodating the anode electrode 41.

Accordingly, a portion of the drum 20 where the notch part 24 is formed may have a reduced diameter. That is, when viewed from the outside of the drum 20, the notch part 24 may be in the form of a groove concave inwardly along the circumferential direction on the outer circumferential surface of the drum body 21.

The drum body 21 may be alternately disposed with the notch part 24. For example, three drum bodies 21 may be provided, two notch parts 24 may be provided, and one notch part 24 may be disposed between the two drum bodies 21. That is, two notch parts 24 may be disposed at a predetermined distance from each other. However, the number of the notch parts 24 and the number of the drum bodies 21 are not limited thereto, and may be varied according to the overall size of the drum 20.

On the other hand, the notch part 24 may be provided with an air inlet 24c to communicate the inside of the drum body 21 with the inside of the cabinet 10. Accordingly, the air outside the drum 20 may be introduced into the drum 20 through the air inlet 24c.

Specifically, when the circulation fan 33 is driven and the air inside the drum 20 is sucked into the exhaust duct 31, a negative pressure may be generated inside the drum 20, and the air outside the drum 20 may be forcibly introduced into the hollow of the drum 20 through the air inlet 24c of the notch part 24.

Such air flowing can quickly remove the water vapor evaporated from the subject to be dried. In addition, the air flow induces the evaporation of moisture inside the subject to be dried to additionally remove moisture from the subject to be dried. In addition, when power is applied to the anode electrode 41 and the matcher 42 to generate heat, it can be cooled to extend the lifespan.

Meanwhile, at least one lifter 25 may be provided on the inner circumferential surface of the drum 20. For example, three lifters 25 may be provided at regular intervals (120 degrees). The lifter 25 may be fixedly coupled to the inner circumferential surface of the drum body 21 and the inner surface of the notch 24, and may be formed in a shape protruding from the inner circumferential surface of the drum body 21 and the inner surface of the notch part 24 toward the rotation axis of the drum 20. The lifter 25 may be provided to be in contact with the subject to be dried accommodated in the drum 20. With this configuration, when the drum 20 rotates, the subject to be dried can be rotated together with the drum 20 to a predetermined angle while being supported by the lifter 25, and then fall to the lower side by its own weight. In this process, the subject to be dried can be naturally mixed. That is, the subject to be dried may be agitated by the lifter 25, the tumble motion of the subject to be dried may be increased, and the subject to be dried may be heated uniformly while shaking about the rotation axis of the drum 20.

As a result, there is an effect that can suppress the occurrence of bunching on the subject to be dried by the lifter 25.

On the other hand, the rotating conductive drum 20 is connected to the ground electrode 26 by direct rotation or capacitive coupling connection. For example, the ground electrode 25 may be selectively activated or continuously connected only when RF power is applied.

The connection between the ground electrode and the drum body 21 may be continuously activated during movement. Alternatively, the connection between the ground electrode and the drum body 21 may be selectively connected when rotating or stopping.

The anode electrode 41 may include an anode electrode plate 41a, an air passage hole 41b, a support frame 41c, a coupling frame 41d, and a fixing panel 41e.

The anode electrode plate 41a may have an arc shape cut by a predetermined angle from the ring as well as a ring-shaped plate. For example, the anode electrode plate 41a may be disposed on a concentric circle with respect to the central axis of the drum body 21, and may be an arc-shaped plate formed over a range of 120 degrees with the rotation axis of the drum 20 as the origin. That is, the anode electrode 41 may have a ring shape cut by one third.

Meanwhile, in the present embodiment, the anode electrode plate 41a is configured as a pair and disposed to face each other, but is not limited thereto.

In addition, both ends of the anode electrode plate 41a may be formed to extend outwardly in the radial direction to be fixedly coupled to a coupling frame 41d to be described later.

A plurality of air passage holes 41b may be formed in the anode electrode plate 41a, and may be formed to correspond to the position of the air inlet 24a of the notch part 24. With this configuration, the air outside the drum 20 may be flowed into the drum 20.

Specifically, when the circulation fan 33 is driven and the air inside the drum 20 is sucked into the exhaust duct 31, a negative pressure may be generated inside the drum 20, and the air outside the drum 20 may be forcibly introduced into the hollow of the drum 20 through the air passage hole 41b.

In addition, there is an effect of cooling the overheated anode electrode plate 41a while air passes through the anode electrode plate 41a through the air passage hole 41b.

The support frame 41c may be formed to extend downward in the direction of gravity from the anode electrode plate 41a. The support frame 41c may be in contact with the upper outer circumferential surface of the exhaust pipe 31c disposed on the lower side, and the anode electrode plate 41a may be supported by the support frame 41c.

The coupling frame 41d may be provided to couple a pair of anode electrode plates 41a to each other. Specifically, the coupling frame 41d is formed in a flat bar shape with one end bent, and the pair of anode electrode plates 41a is fixedly coupled to both flat surfaces of the end bent, respectively. In this case, the bent angle of the coupling frame 41d is formed to correspond to the shape of both ends of the anode electrode plate 41a.

Two coupling frames 41d may be provided to correspond to the positions of both ends of the anode electrode plate 41a. With this configuration, both ends of the pair of anode electrode plates 41a may be fixed to the coupling frame 41d.

The fixing panel 41e may be formed in a flat plate shape, and both ends in the longitudinal direction may be coupled to the coupling frame 41d, respectively. Accordingly, the fixing panel 41e serves to fix the anode electrode plate 41a to maintain a constant distance.

That is, the plurality of anode electrode plates 41a may maintain a predetermined distance by the fixing panel 41e, and may maintain a state spaced apart from the drum 20 by a predetermined distance even when the drum 20 rotates.

The anode electrode 41 may be disposed below the drum 20, and may be spaced apart from the drum body 21 and the notch part 24 at a predetermined distance.

The anode electrode 41 may be disposed to correspond to the position of the notch part 24 formed on the outer circumferential surface of the drum body 21.

With this configuration, when the subject to be dried is placed inside the drum 20, the anode electrode 41 can apply a sufficient electric field to the subjects to be dried even if they gather at the lower part of the drum body.

In addition, the anode electrode 41 may be disposed in the space of the notch part 24 formed concavely inwardly based on the outer circumferential surface of the drum body 21. For example, the anode electrode 41 may be disposed to correspond to two notch parts 24 formed with a predetermined interval therebetween. In this case, the two anode electrodes 41 may be fixed to the pair of fixing panels 41e so that the distance therebetween may be maintained.

With this arrangement, the anode electrode 41 and the outer circumferential surface of the drum body 21 serving as the cathode electrode may be alternately disposed along the axial direction.

Meanwhile, the width and perimeter of the anode electrode 41 and their ratio can be changed.

The anode electrode 41 may be made of bare metal or insulating metal. An insulator may be coated on the anode electrode 41. In contrast, the drum 20 may be made of a conductive material, that is, a metal, or an insulating material coated with a conductive layer.

Meanwhile, the notch part 24 of the drum 20 is spaced apart from the anode electrode 41. Thus, the anode electrode 41 is spatially fixed, and the drum 20 can rotate. The drum 20 can freely rotate clockwise and counterclockwise about a rotation axis. In addition, since the drum 20 is not in contact with the anode electrode 41, the rotation speed can be freely changed.

That is, the anode electrode 41 and the drum 20 may be provided to be relatively rotatable. In this case, the subject to be dried (clothes) may be positioned between the fixed anode electrode 41 and the rotating conductive drum 20.

For example, the anode electrode 41 may be disposed in the space formed in the notch part 24 and may be disposed in a radial direction perpendicular to the outer circumferential surface of the drum body 21. Accordingly, the subject to be dried may be located in a space surrounded by the anode electrode 41 and the outer circumferential surface of the drum body 21 disposed perpendicular to each other.

With this configuration, when RF power is applied through the power supply unit 43, the electric field between the anode electrode 41 and the drum 20 electrically penetrates the notch part 24 and the electric field may be formed in the inner space of the drum 20, and the moisture contained in the subject to be dried can be heated and evaporated while vibrating by the electric field.

More specifically, the anode electrode 41 may generate an RF (radio frequency) capacitive coupling effect by maintaining the electric field necessary for drying the subject to be dried in relation to the drum 20. That is, it is preferable to use a relatively low RF frequency in order to minimize parasitic capacitance generated in the drum 20 serving as the cathode electrode. For example, the frequency of 10 MHz or more and 15 MHz or less may be used for the anode electrode 41. In this case, in order to improve energy efficiency, it is preferable that the subject to be dried is located close to the drum 20 and the anode electrode 41. Meanwhile, the parasitic capacitance is independent of the capacitance of the subject to be dried itself, and may be defined as an arbitrary capacitance between the anode electrode 41 and the drum 20.

An AC current may be generated at a capacitive circuit through a semiconducting (wetting) load of the subject to be dried, and RF generation current of a single frequency is applied to between at least one fixed anode electrode 41 and the rotating drum 20, so that the subject to be dried can be dielectrically heated.

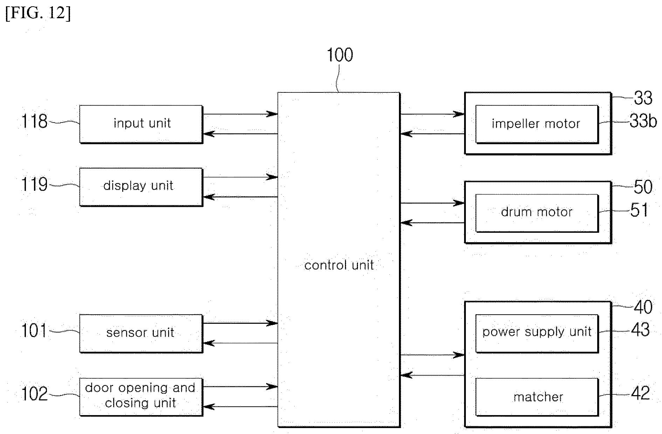

FIG. 12 is a block diagram for explaining a control configuration in the laundry drying machine according to the embodiment of the present invention.

Referring to FIGS. 1 to 3 and 12, the configuration for control in the present invention will be described as follows.

First, the control unit 100 may be signally or electrically connected to the input unit 118 and the display unit 119. Accordingly, when a user inputs a control command to the input unit 118, the input unit 118 may transmit information on the control command to the control unit 100, and the control unit 100 may store the information. In addition, the control unit 100 may transmit the information on the control command input by the user to the display unit 119 to display the information to the user. In addition, the control unit 100 may transmit information such as the load of the subject to be dried, the drying progress status, and the time required for drying to the display unit so that the display unit 119 can notify the user.

In addition, the control unit 100 is connected to a sensor unit 101 and a door opening and closing unit 102. The sensor unit 101 may measure the temperature of the subject to be dried, the air flow within the drum 20, and the like. The door opening and closing unit 102 may notify the control unit 100 of whether the door 112 is opened or closed with respect to the drum 20, and may notify the control unit 100 of whether the door 112 is locked or unlocked when the door 112 is closed. In addition, the control unit 100 may transmit a control signal to the door opening and closing unit 102 to selectively open and close the door 112, and may transmit a control signal to selectively lock and unlock the door when the door is closed.

In addition, the control unit 100 may be connected to the drum motor 51. Accordingly, the control unit 100 may drive the drum motor 51 to rotate or stop the drum 20, control the rotation speed of the drum 20, and convert the rotation direction of the drum 20.

In addition, the rotation speed of the drum 20 may be tracked by the control unit 100. This is to determine the optimal power tuning during the drying cycle as water is gradually evaporated from the subject to be dried.

In addition, the control unit 100 may be connected to the impeller motor 33b. Accordingly, the control unit 100 may rotate or stop the circulation fan 33 by driving the impeller motor 33b, and may control the rotation speed of the circulation fan 33. Accordingly, the control unit 100 may control the amount of air discharging in the drum 20.

In addition, the control unit 100 may control the electric field generator 40. That is, the control unit 100 may control the power supply unit 43 to supply power to the anode electrode 41, and may cut off the supplied power. Also, the control unit 100 may control the matcher 42 to match the source impedance and the impedance of load side. With this configuration, the control unit 100 may apply a stable electric field to the subject to be dried to dielectrically heat the subject to be dried.

Specifically, the control unit 100 may control to change at least one of RF power, impedance Z, RF reflection coefficient, VSWR, and the like in real time in order to transmit optimal energy to the subject to be dried. The control unit 100 uses these measurements to determine the type, size and wetting of the load, and the optimal time for ending the drying process.

Meanwhile, the control unit 100 may transmit a notification signal or message to a user before drying starts and when the drying process is ended. The notification signal may be notified visually through the display unit 119 or audibly through a speaker (not shown) as described above. The message may also be in the form of a text message sent to the user's mobile phone, for example using the SMS protocol.

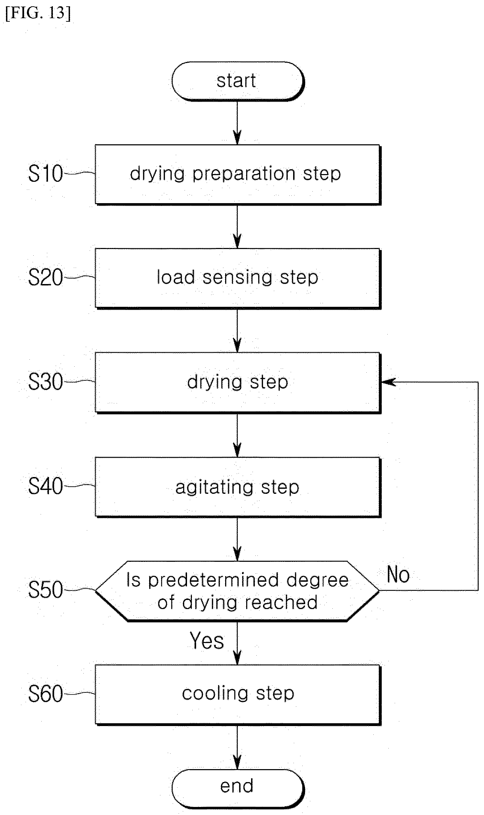

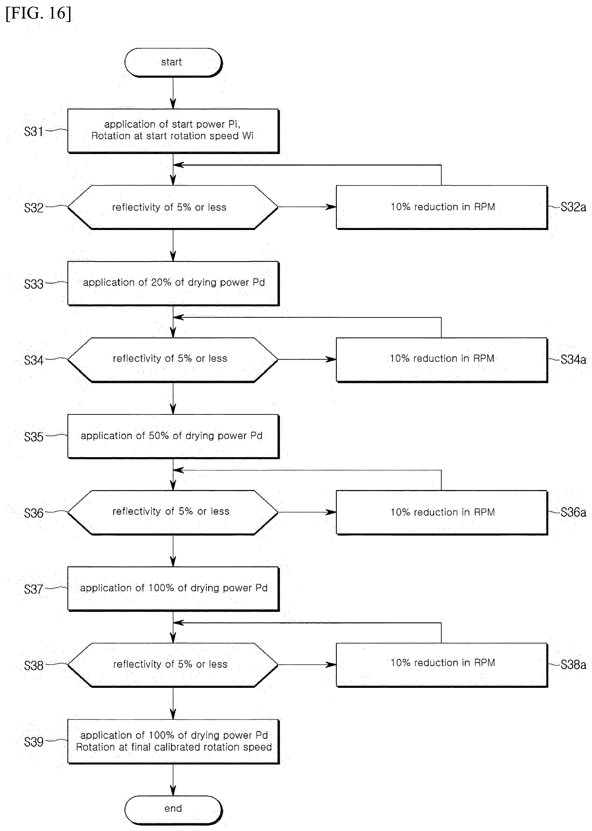

FIG. 13 is a flowchart illustrating a procedure according to a control method of a laundry drying machine according to an embodiment of the present invention, and FIG. 16 is a flowchart for explaining a process of controlling the rotation speed of the drum and RF power for impedance matching during a drying process in a control method of a laundry drying machine according to an embodiment of the present invention.

A method of controlling a laundry drying machine according to an embodiment of the present invention will be described with reference to FIGS. 1 to 3 and FIGS. 9 to 16.

The control method of the laundry drying machine of the present invention includes a drying step (S30) and an agitating step (S40) and may include a drying preparation step (S10), a load sensing step (S20), and a cooling step (S60).

In the drying preparation step (S10), the subject to be dried is accommodated in the drum 20, and a drying course may be set by a user's control input. When the subject to be dried is put into the drum 20, it is placed on the bottom of the drum 20 by gravity, and the subject to be dried comes into contact with the notch part 24 disposed adjacent to the anode electrode 41 and the drum body 21 having conductivity.

In the drying preparation step (S10), the user may input the information on the material and quantity of the subject to be dried through the input unit 118, and the input unit 118 may transmit this information to the control unit 100.

In this case, the information on the heat of vaporization for each material of the subject to be dried may be stored in advance in the control unit 100. Accordingly, the control unit 100 may set the amount of energy to be applied to the subject to be dried according to the material and size of the subject to be dried.

In the load sensing step (S20), the quantity of wash may be determined by sensing the load of the subject to be dried.

The quantity of wash may be determined by measuring the current value of the drum motor 51 while the drum 20 is rotating and sensing the load acting on the drum motor 51.

For example, when the drum 20 is controlled to rotate at a speed sensing a predetermined quantity of wash, a greater current must be applied to the drum motor 51 as the quantity of wash increases. Accordingly, the control unit 100 may control the value of current applied to the drum motor 51. Accordingly, the control unit 100 may calculate the quantity of wash based on the sensed current value of the drum motor 51.

On the other hand, in the load sensing step (S20), the drum 20 may rotate at a preset agitating rotation speed $w_m$. The agitating rotation speed $w_m$ will be described in detail in the agitating step (S40).

Meanwhile, the control unit 100 may pre-store a moisture content according to the material of the subject to be dried. Accordingly, the control unit 100 may predict the evaporation time of moisture contained in the subject to be dried according to the amount of energy applied to the subject to be dried based on the information on the material and amount of the subject to be dried that is collected through the drying preparation step (S10) or the load sensing step (S20). In addition, the control unit 100 may transmit the predicted evaporation time of moisture to the display unit 119, and the display unit 119 may display the predicted time to the user.

According to the present invention, in the drying step (S30), the control unit 100 applies power to the anode electrode 41 and rotate the drum 20 to evaporate the moisture contained in the subject to be dried by dielectric heat.

Specifically, the control unit 100 may apply power to the anode electrode 41 to generate the electric field in relation to the drum 20 serving as the cathode electrode. In this state, RF power may be applied to the drum 20 and the subject to be dried. In this case, the current applied to the anode electrode 41 may be maintained at a predetermined frequency by the matcher 42, and the source impedance of the high frequency power supply and the impedance of load side may be continuously matched by the matcher 42.

The control unit 100 may control the matcher 42 and the power supply unit 43 to measure appropriate power, drying, load size, and drying end time, and perform the drying process. In this case, the preferred operation frequency of the power source 21 is in the range of 1 MHz to 50 MHz.

With this configuration, the anode electrode 41 maintains the electric field necessary for drying the subject to be dried in relation to the drum 20 to generate a radio frequency (RF) capacitive coupling effect. In this case, it is preferable to use a relatively low RF frequency in order to minimize the parasitic capacitance generated in the drum 20 serving as the cathode electrode. For example, the frequency of 10 MHz or more and 15 MHz or less may be used for the anode electrode 41.

Therefore, it is possible to generate an AC current flow through the semi-conductive (wetting) load of the subject to be dried in a capacitive circuit, and the subject to be dried can be dielectrically heated by applying the RF generation current of a single frequency between at least one anode electrode 41 and the drum 20.

In the drying step (S30), the control unit 100 applies RF power to the anode electrode 41 for a preset drying time td. For example, the control unit 100 may apply RF power to the anode electrode 41 for the time period of 80 seconds or more and 100 seconds or less, and preferably apply RF power to the anode electrode 41 for the time period of 90 seconds.

On the other hand, in the conventional dielectric heating type drying machine, when power is applied to an anode electrode, a drum is stopped without rotating. This enables continuous heating after the matcher performs impedance matching once at the start of drying, and thus, it is effective in heating the moisture contained in the subject to be dried at a high speed.

However, when the internal temperature of the subject to be dried rapidly increases as described above, there is a problem in that local overheating occurs inside the subject to be dried.

In particular, when the subject to be dried is a dyed synthetic fiber, there is a problem in that color transfer occurs due to local overheating. In the case of synthetic fibers, if the temperature exceeds 50 degrees Celsius, there is a possibility of color transfer.

In order to solve this problem, the conventional drying machine rotates the drum for 5 seconds to mix the subject to be dried after drying for 90 seconds. However, since dielectric heating is performed again in a state in which the heat inside the subject to be dried is not sufficiently discharged, there is an issue that the internal temperature of the subject to be dried continuously increases as the drying cycle progresses.

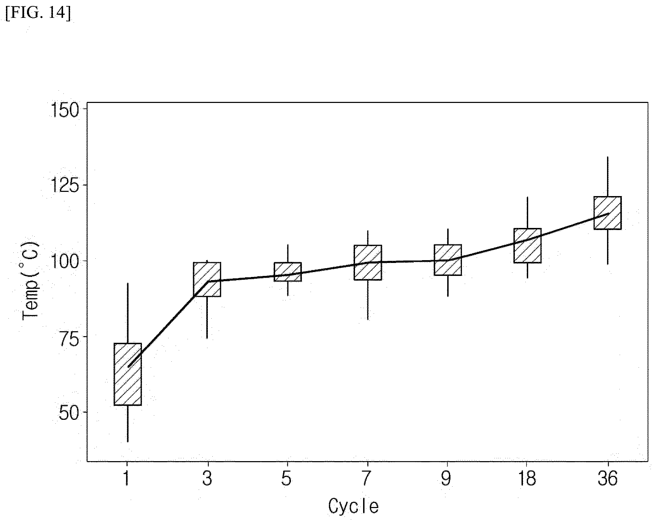

Considering the temperature change of the subject to be dried with reference to FIG. 14, it can be seen the temperature change inside the subject to be dried when the subject to be dried is dried by the conventional dielectric heating method. The process for applying RF power 90 seconds while the drum is stopped, stopping the RF power application for 5 seconds, and rotating the drum is repeated 36 cycles, and as a result, it can be seen that the temperature inside the subject to be dried rises to 145 degrees Celsius.

In addition, in the case of heating after sufficiently discharging internal heat, the energy and time required for performing the dielectric heating again are large, so there is a problem in that the drying efficiency is decreased.

Therefore, it is necessary to control so that local overheating does not occur while maintaining heating of the subject to be dried.

In order to solve this problem, in the drying step (S30) of the present invention, the control unit 100 rotates the drum 20 while power is applied to the anode electrode 41. That is, in the drying step (S30), the control unit 100 may rotate the drum 20 at a preset drying rotation speed wd.

In this case, the rotation speed of the drum 20 is slower than the rotation speed of the drum 20 in the load sensing step (S20) or the rotation speed of the drum 20 in the agitating step (S40) to be described later.

Specifically, the rotation speed range of the drum 20 in the drying step (S30) may be determined from two viewpoints.

First, the rotation speed of the drum 20 at which local overheating does not occur in the drying step (S30) is derived as follows.

In order to prevent color transfer to the subject to be dried, the temperature of the subject to be dried should be maintained at 50 degrees Celsius or less. To this end, it is necessary to keep the temperature increase per heating time low. The amount of temperature increase per unit time is as follows.

[Equation 1]

$$\frac{\Delta T}{\Delta t} = \frac{P_v}{C_p \cdot \rho} = \frac{55.63 \times 10^{-12} \cdot f \cdot E^2 \cdot \varepsilon''}{C_p \cdot \rho}$$

In this case, $\Delta T$ means an amount of temperature increase (°C), and $\Delta t$ means heating time (seconds). In addition, Cp is the specific heat of the dielectric (J/kg·K), f is a frequency (Hz), $\rho$ is the density of the dielectric (kg/m$^3$), and $\varepsilon_0$ is a dielectric constant in a vacuum state.

Meanwhile, Pv is a power absorbed per unit volume depending on the dielectric, and it can be expressed as the following equation.

[Equation 2]

$$P_v = 2\pi \cdot f \cdot \varepsilon_0 \cdot \varepsilon'' E^2$$

In this case, $\varepsilon''$ means a relative electric loss factor, and E means an electron density.

Here, when the above equations 1 and 2 are combined in consideration of the moving distance according to the rotation of the drum 20, the following equation is obtained.

[Equation 3]

$$\Delta T = \frac{55.63 \times 10^{-12} \cdot f \cdot E^2 \cdot \varepsilon'' \cdot 30 \cdot \theta}{C_p \cdot \rho \cdot \pi \cdot \alpha}$$

When an outside temperature is 20 degrees Celsius, a temperature change must be 30 degrees or less in order to maintain the temperature of the subject to be dried at 50 degrees Celsius or less. Accordingly, the minimum rotation speed of the drum 20 in the drying step (S30) is determined by the following equation.

[Equation 4]

$$\alpha > \frac{55.63 \times 10^{-12} \cdot f \cdot E^2 \cdot \varepsilon'' \cdot \theta}{C_p \cdot \pi \cdot \rho}$$

In this case, $\theta$(rad) denotes an angle at which the anode electrode 41 is disposed with respect to the rotation axis of the drum 20, and $\alpha$ denotes the rotation speed of the drum 20. Accordingly, the rotation speed of the drum 20 in the present invention is proportional to the angle occupied by the anode electrode 41 with respect to the rotational axis of the drum 20.

For example, if RF power of 4000W having a frequency of 13.56 MHz is applied to the anode electrode, and the arc-shaped anode electrode 41 surrounds the drum 20 at an angle (range) of 120 degrees ($2\pi/3$), the minimum rotation speed in the drying step (S30) of the present invention is 1.6 rpm. In addition, considering that the minimum rotation speed $\alpha$ of the drum 20 is proportional to $\theta$ (rad), the proportionality between the angle of the anode electrode 41 surrounding the drum 20 and the minimum rotation speed of the drum 20 is as follows.

[Equation 5]

$$\alpha > \frac{12\theta}{5\pi}$$

That is, the minimum rotation speed of the drum 20 is $12/5\pi$ times the angle at which the anode electrode 41 surrounds the drum 20 with the rotation axis of the drum 20 as the origin.

Meanwhile, in the drying step (S30), the control unit 100 may rotate the drum 20 while maintaining the rotation speed of the drum 20 at 7 rpm or less.

Specifically, in the dielectric heating type RF drying machine, as the rotation speed of the drum 20 increases, the load increases, and it becomes difficult for the matcher 42 to match the source impedance and the impedance of load side. Accordingly, when the rotation speed of the drum 20 exceeds 7 rpm, the inside of the subject to be dried may not be dielectrically heated.

As a result, in the drying step (S30), the control unit 100 may rotate the drum 20 at $12/5\pi$ times or more of the angle at which the anode electrode 41 surrounds the drum 20, and a rotation speed of 7 rpm or less.

With this configuration, the control method of the laundry drying machine according to the embodiment of the present invention has the effect of preventing the occurrence of color transfer by maintaining the temperature of the subject to be dried at 50 degrees Celsius or less while removing moisture from the subject to be dried by dielectric heating the inside of the subject to be dried.

In addition, in this method, it takes for the matcher 42 to match the impedance in order to supply the RF power again, which is about 7 seconds. Therefore, there is a problem in that power may be wasted in this process, and the overall drying time increases.

In order to solve this problem, in the drying step (S30) of the present invention, the control unit 100 rotates the drum 20 while power is applied to the anode electrode 41. In this case, the rotation speed of the drum 20 may be slower than the rotation speed of the drum 20 in the load sensing step (S20) or the rotation speed of the drum 20 in the agitating step (S40) to be described later.

In addition, in the drying step (S30) of the present invention, the control unit 100 decreases the rotation speed of the drum when the reflectivity of the electric field exceeds a predetermined ratio, and the control unit may increase the power to be applied to the anode electrode when the reflectivity of the electric field is less than or equal to a predetermined ratio. Specifically, the drying step (S30) includes a drying entry step (S31), a first power increasing step (S33), a second power increasing step (S35), a third power increasing step (S37), and a rotation maintaining step (S39).

In the drying entry step (S31), the control unit 100 may apply a preset start power Pi to the anode electrode 41 and rotate the drum 20 at a preset start rotation speed Wi. That is, the power supply unit 43 may apply power corresponding to the preset start power Pi to the anode electrode 41 when the application of the power to the anode electrode 41 is started according to the control command of the control unit 100.

For example, in the drying entry step (S31), the control unit 100 may apply the power of 100W or more and 200W or less to the anode electrode 41 through the power supply unit 43, and rotate the drum 20 at a rotation speed of 5rpm or more and 10rpm or less.

After the drying entry step (S31), the control unit 100 may obtain the reflectivity through the matcher 42. That is, the matcher 42 can measure the reflected wave of the electric field that is reflected from the subject to be dried and returns, and the control unit 100 compares it with the incident wave of the electric field generated at the anode electrode 41 to obtain the reflectivity of the electric field (S32).

In this case, when the reflectivity of the electric field exceeds a predetermined ratio, the control unit 100 may reduce the rotation speed of the drum 20. For example, when the reflectivity of the electric field exceeds 5%, the rotation speed of the drum 20 may be reduced by 10% (S32a). That is, the rotation speed W of the drum 20 may be 90% of the start rotation speed (W=0.9×Wi).

Then, the control unit 100 may repeat the process of reducing the rotation speed of the drum 20 until the reflectivity of the electric field of the drum 20 is less than or equal to a predetermined ratio. If the rotation speed is decelerated n times, the rotation speed W of the drum 20 may be $(0.9)^n \times Wi$ ($W=(0.9)^n \times Wi$).

Meanwhile, when the reflectivity of the electric field is less than or equal to a predetermined ratio, the control unit 100 may perform the first power increasing step (S33). For example, when the reflectivity of the electric field is 5% or less, the first power increasing step (S33) may be performed.

In the first power increasing step (S33), the control unit 100 may increase the power P applied to the anode electrode 41. For example, when the reflectivity of the electric field is 5% or less, the control unit 100 may transmit RF power ($P=0.2 \times Pd$) corresponding to 20% of a preset drying power Pd through the power supply unit 43 to the anode electrode 41.

Meanwhile, the rotation speed W1 of the drum 20 in the first power increasing step (S33) may maintain the rotation speed W of the drum 20 in the immediately preceding step. That is, if the rotation speed of the drum 20 is reduced after the drying entry step (S31), the reduced rotation speed ($W1 = (0.9)^n \times Wi$) of the drum 20 is maintained, and if the rotation speed of the drum 20 is not reduced after the drying entry step (S31), the start rotation speed (W1=Wi) may be maintained.

When the reflectivity of the electric field is less than or equal to a predetermined ratio, the power corresponding to 20% of the preset drying power may be applied to the anode electrode.

After the first power increasing step (S33), the control unit 100 may obtain a reflectivity through the matcher 42. That is, the matcher 42 can measure the reflected wave of the electric field that is reflected from the subject to be dried and returns, and the control unit 100 compares it with the incident wave of the electric field generated from the anode electrode 41 to obtain the reflectivity of the electric field (S34).

In this case, when the reflectivity of the electric field exceeds a predetermined ratio, the control unit 100 may reduce the rotation speed W of the drum 20. For example, when the reflectivity of the electric field exceeds 5%, the rotation speed of the drum 20 may be reduced by 10% (S34a). That is, the rotation speed W of the drum 20 may be 90% of the start rotation speed (W=0.9×W1).

Then, the control unit 100 may repeat the process of reducing the rotation speed of the drum 20 until the reflectivity of the electric field of the drum 20 is less than or equal to a predetermined ratio. If the rotation speed is decelerated n times, the rotation speed W of the drum 20 may be $(0.9)^n \times W1$ ($W=(0.9)^n \times W1$).

Meanwhile, when the reflectivity of the electric field is less than or equal to a predetermined ratio, the control unit 100 may perform the second power increasing step (S35). For example, when the reflectivity of the electric field is 5% or less, the second power increasing step (S35) may be performed.

In the second power increasing step (S35), the control unit 100 may increase the power P applied to the anode electrode 41. That is, the power supply unit 43 may apply the power corresponding to 50% of the drying power Pd to the anode electrode 41 according to the control command of the control unit 100 when the power being applied to the anode electrode 41 corresponds to 20% of the drying power Pd and the reflectivity of the electric field is less than or equal to a predetermined ratio.

For example, when the reflectivity of the electric field is 5% or less, the control unit 100 may apply RF power ($P=0.5 \times Pd$) corresponding to 50% of the preset drying power Pd through the power supply unit 43 to the anode electrode 41.

Meanwhile, the rotation speed W2 of the drum 20 in the second power increasing step (S35) may maintain the rotation speed W of the drum 20 in the immediately preceding step. That is, if the rotation speed of the drum 20 is reduced, the reduced rotation speed of the drum 20 is maintained ($W2 = (0.9)^n \times W1$), and if there is no rotation speed reduction after the drying entry step (S31), the start rotation speed Wi can be maintained (W2=Wi).

After the second power increasing step (S35), the control unit 100 may obtain a reflectivity through the matcher 42. That is, the matcher 42 can measure the reflected wave of the electric field that is reflected from the subject to be dried and returns, and the control unit 100 compares it with the incident wave of the electric field generated from the anode electrode 41 to obtain the reflectivity of the electric field (S36).

In this case, when the reflectivity of the electric field exceeds a predetermined ratio, the control unit 100 may reduce the rotation speed W of the drum 20. For example, when the reflectivity of the electric field exceeds 5%, the rotation speed of the drum 20 may be reduced by 10% (S36a). That is, the rotation speed W of the drum 20 may be 90% of the start rotation speed (W=0.9×W2).

Then, the control unit 100 may repeat the process of reducing the rotation speed of the drum 20 until the reflectivity of the electric field of the drum 20 is less than or equal to a predetermined ratio. If the rotation speed is reduced by n times, the rotation speed W of the drum 20 may be $(0.9)^n \times W2$ $(W = (0.9)^n \times W2)$.

Meanwhile, when the reflectivity of the electric field is less than or equal to a predetermined ratio, the control unit 100 may perform the third power increasing step (S37). For example, when the reflectivity of the electric field is 5% or less, the third power increasing step (S37) may be performed.

In the third power increasing step (S37), the control unit 100 may increase the power P applied to the anode electrode 41. That is, the power supply unit 43 may apply the power corresponding to 100% of the drying power Pd according to the control command of the control unit 100 when the power being applied to the anode electrode 41 corresponds to 50% of the drying power (Pd) and the reflectivity of the electric field is less than or equal to predetermined ratio. For example, when the reflectivity of the electric field is 5% or less, the control unit 100 may apply a preset drying power Pd to the anode electrode 41 through the power supply unit 43. For example, the drying power Pd may be 4000W.

Meanwhile, the rotation speed W3 of the drum 20 in the third power increasing step (S37) may maintain the rotation speed W of the drum 20 in the immediately preceding step. That is, if the rotation speed of the drum 20 is reduced, the reduced rotation speed of the drum 20 is maintained $(W3 = (0.9)^n \times W2)$, and If there is no rotation speed reduction after the drying entry step (S31), the start rotation speed Wi can be maintained (W3=Wi).

After the third power increasing step (S37), the control unit 100 may obtain a reflectivity through the matcher 42. That is, the matcher 42 can measure the reflected wave of the electric field that is reflected from the subject to be dried and returns, and the control unit 100 compares it with the incident wave of the electric field generated from the anode electrode 41 to obtain the reflectivity of the electric field (S38).

In this case, when the reflectivity of the electric field exceeds a predetermined ratio, the control unit 100 may decrease the rotation speed W of the drum 20. For example, when the reflectivity of the electric field exceeds 5%, the rotation speed of the drum 20 may be reduced by 10% (S38a). That is, the rotation speed W of the drum 20 may be 90% of the start rotation speed $(W = 0.9 \times W3)$.

Then, the control unit 100 may repeat the process of reducing the rotation speed of the drum 20 until the reflectivity of the electric field of the drum 20 is less than or equal to a predetermined ratio. If the rotation speed is reduced by n times, the rotation speed W of the drum 20 may be $(0.9)^n \times W3$ $(W = (0.9)^n \times W3)$.

On the other hand, when the reflectivity of the electric field is less than or equal to a predetermined ratio, the control unit 100 may perform the rotation maintaining step (S39). For example, when the reflectivity of the electric field is 5% or less, the rotation maintaining step (S39) may be performed.

In the rotation maintaining step (S39), the control unit 100 may apply the drying power Pd to the anode electrode 41 and maintain the rotation speed of the drum 20 to dry the subject to be dried. That is, when the drying power Pd is applied to the anode electrode 41 and the reflectivity of the electric field reflected from the subject to be dried is less than or equal to a predetermined ratio, the control unit 100 may maintain the rotation speed of the drum 20.

Specifically, in the rotation maintaining step S39, the control unit 100 may continuously maintain the drying power Pd applied to the anode electrode 41 in the third power increasing step (S37). In addition, the final rotation speed Wf of the drum 20 in the rotation maintaining step (S39) may maintain the rotation speed W of the drum 20 in the immediately preceding step. That is, if the rotation speed of the drum 20 is reduced in the previous step, the reduced rotation speed of the drum 20 is maintained $(Wf = (0.9)^n \times W3)$, and if there is no reduction in the drum 20 after the drying entry step (S31), the start rotation speed Wi can be maintained (Wf=Wi).

With this configuration, the control method of the laundry drying machine according to the embodiment of the present invention has the effects of removing moisture from the subject to be dried by dielectrically heating the inside of the subject to be dried, preventing the occurrence of local overheating in the subject to be dried through the rotation of the drum 20, and preventing the occurrence of color transfer by maintaining the temperature of the subject to be dried at 50 degrees Celsius or less.

In particular, in the dielectric heating type drying machine in which the anode electrode 41 is fixed and the drum 20 rotates, the control method of the laundry drying machine according to the embodiment of the present invention can have an effect of heating the subject to be dried accommodated in the drum while rotating the drum.

In this case, since the drying process can be started immediately without a time for separate impedance matching by controlling the rotation speed and RF power of the drum to lower the reflectivity of the electric field, there is an effect of saving time and energy required for impedance matching.

In addition, there is an effect of preventing damage to equipment such as a matcher due to the reflected wave.

In addition, in the drying step (S30), the subject to be dried can be in contact with the lifter 25 at least once by the rotation of the drum 20, and the effect of preventing local overheating while the subject to be dried is mixed by the lifter 25 can be increased

Meanwhile, in the drying step (S30), the control unit 100 may drive the circulation fan 33 to discharge the humid air present in the drum 20 to an outside. At the same time, the air outside the drum 20 may be introduced into the drum 20.

With this configuration, the water vapor of the subject to be dried can be induced to be evaporated by the air flow.

In addition, the overheated anode electrode 41 and the matcher 42 can be cooled by this air flow.

Meanwhile, as another embodiment, in the drying step (S30), the control unit 100 may measure the temperature of the subject to be dried through the sensor unit 101, and when the temperature of the subject to be dried is equal to or higher than a preset reference temperature, the control unit may control the rotation speed of the drum 20 and maintain the internal temperature of the subject to be dried at 50 degrees or less.

Meanwhile, in the agitating step (S40), the control unit 100 may cut off the power applied to the anode electrode 41 and rotate the drum 20 to mix the subject to be dried.

Specifically, in the agitating step (S40), the control unit 100 cuts off the power applied in the drying step (S30) to stop the dielectric heating, and the drum 20 can be rotated at a preset agitating rotation speed $w_m$.

With this configuration, it is possible to prevent overheating due to long-term use of the power supply unit 43, and at the same time, there is an effect that the subject to be dried can be mixed and heated uniformly.

In this case, the rotation speed of the drum 20 in the agitating step (S40) rotates the drum 20 at a faster speed than the rotation speed of the drum 20 in the drying step (S30). That is, the drying rotation speed wd is smaller than the agitating rotation speed $w_m$. As an example, the agitating rotation speed $w_m$ may be 30rpm.

On the other hand, in the conventional hot air supply type drying machine, the drum is constantly rotated at 50 rpm so that the hot air is uniformly supplied to the subject to be dried during the drying process.

In this case, the subject to be dried is rotated by centrifugal force and moved upwards inside the drum, and it is dropped by gravity. In this case, the drying performance may be increased by increasing the contact area with the hot air while the subject to be dried is falling, but there is an issue that the subject to be dried shrinks due to mechanical force.

Contrary to this, in a dielectric heating type drying machine in which the inside of the subject to be dried is heated, it is necessary to mix and heat the subject to be dried uniformly, but it is not necessary to generate a falling motion that causes the shrinkage of the subject to be dried.

That is, in the dielectric heating type drying machine, it is necessary to reduce the shrinkage of the subject to be dried by preventing the subject to be dried from falling in the process of mixing the subject to be dried.

In order to solve this problem, in the agitating step (S40) according to the embodiment of the present invention, the control unit 100 controls the drum motor 51 to rotate the drum 20 at a rotation speed of less than 50 rpm. That is, the agitating rotation speed $w_m$ in the agitating step (S40) according to the embodiment of the present invention is less than 50rpm. Specifically, the agitating rotation speed $w_m$ that causes the subject to be dried to slide along the inner circumferential surface of the drum 20 without performing a falling motion in the agitating step (S40) can be obtained as follows.

When the drum motor 51 is driven by the command of the control unit 100 in the agitating step (S40), the drum 20 rotates about the rotation axis, and the subject to be dried may move along the inner circumferential surface of the drum 20.

Specifically, that is, the rotation shaft of the drum 20 may be disposed parallel to the ground, or may be disposed at a predetermined angle with the ground. **In** this case, when the subject to be dried is put into the drum 20, the subject to be dried is gathered in a part close to the ground in the drum 20 by gravity. **In** addition, at least a part of the subject to be dried is in contact with the inner circumferential surface of the drum 20. **In** addition, the subject to be dried is in a state in which the inner circumferential surface of the drum 20 is pressed by weight.

When the drum 20 starts to rotate, the inner circumferential surface of the drum 20 that is in contact with the subject to be dried starts to rotate. **In** this case, the subject to be dried also rotates about the rotation shaft of the drum 20 together with the inner circumferential surface of the drum 20 by the force of the subject to be dried pressing the inner circumferential surface of the drum 20 by gravity or inertia force.

**In** this case, the maximum speed that the subject to be dried can have may be the speed of the drum 20. However, the speed of the subject to be dried may be reduced by gravity, air resistance, and the like.

As a result, when the radius of the drum 20 is r, the maximum speed v of the subject to be dried contained in the drum 20 rotating at the agitating rotation speed $w_m$ is the product ($v=r\times w_m$) of the radius r of the drum 20 and the agitating rotation speed $w_m$.

Therefore, when the mass of the subject to be dried is m, the maximum kinetic energy (Ek) of the subject to be dried in the agitating step (S40) is as follows.

$$Ek = \frac{1}{2} \cdot m r^2 w_m{}^2$$

On the other hand, when the subject to be dried moves upward in the direction of gravity along the inner circumferential surface of the drum by the rotation of the drum 20, potential energy Ep may be generated by the difference in height h from the point close to the ground to the position where the subject to be dried is moved in the drum 20. Therefore, the potential energy Ep when the subject to be dried is moved by the drum is as follows.

$$Ep = mgh$$

In this case, in order to move the subject to be dried downward, the potential energy

Ep must be greater than the kinetic energy Ek (Ep>Ek).

$$mgh > \frac{1}{2} \cdot mr^2 W_m^2$$

In addition, even if the potential energy Ep is greater than the kinetic energy Ek, a fall due to gravity may occur in the case where the point is too high inside the drum 20. Thus, at an appropriate height h the potential energy Ep must be greater than the kinetic energy Ek. That is, when considering the cross section (circle) of the drum 20 as a reference, a falling motion occurs due to gravity in the case where even a part of the subject to be dried moves to the upper semicircular region of the drum 20. Thus, the entire subject to be dried has to have the potential energy Ep greater than the kinetic energy Ek in the lower semicircle region of the drum 20.

In this case, considering that in this embodiment, the anode electrode 41 is formed over a range of 120 degrees with respect to the rotation axis of the drum 20, and heating of the subject to be dried is made within the range of the anode electrode 41, it can be seen that the subject to be dried is spread over a range of up to 120 degrees with respect to the rotation axis of the drum 20. That is, it can be seen that it is spread symmetrically in the range of 60 degrees based on the vertical line. Therefore, in order for all the subjects to be dried to be located in the lower semicircular region of the drum 20, the subjects to be dried must be moved only within a range of 30 degrees based on the rotation axis of the drum 20.

The height h in this case is summarized using the radius r of the drum 20 as follows.

$$r\left(1 - \frac{\sqrt{3}}{2}\right) \geq h$$

Therefore, if the above equations are arranged, the agitating rotation speed $w_m$ may have the following range.

$$W_m^2 \leq \frac{2g\left(1 - \frac{\sqrt{3}}{2}\right)}{r}$$

That is, the square of the agitating rotation speed may be set in inverse proportion to the radius of the drum.

The value obtained by multiplying the radius of the drum and the square of the agitating rotation speed (rad/s) may be 0.27 times or less of the magnitude of the gravitational acceleration.

For example, if the radius r of the drum 20 is 30 cm, the agitating rotation speed $w_m$ may be about 28.4 rpm.

However, the above range means that the speed of the subject to be dried is not reduced due to gravity, air resistance, and the like, and when the moving speed of the subject to be dried is reduced due to gravity, air resistance, and the like, the falling motion of the subject to be dried may not occur even in the increasing of the agitating rotation speed $w_m$. Accordingly, the difference in rotation speed in this regard is included in the scope of the present invention.

Accordingly, the agitating rotation speed $w_m$ at which the falling motion of the subject to be dried does not substantially occur may be 30 rpm or less.

With this configuration, the subject to be dried can slide along the inner circumferential surface of the drum when the drum 20 rotates at the agitating rotation speed $w_m$.

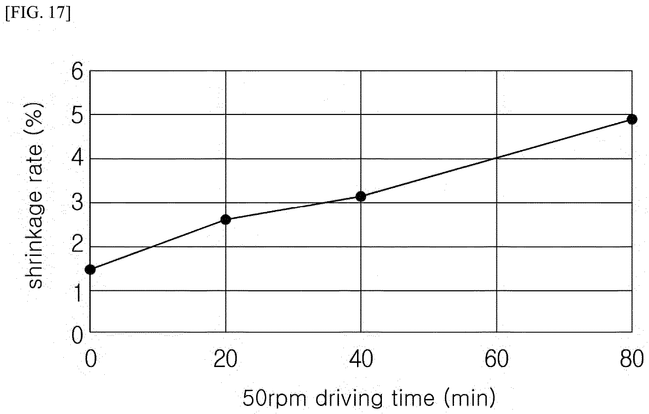

On the other hand, FIG. 17 is a graph showing the difference in the shrinkage rate according to the time when the control method of the laundry drying machine according to the embodiment of the present invention is applied.

The graph shows the shrinkage of cotton clothes when the drum is rotated at 30 rpm or less (0 min) in the entire section (0 min), 30 rpm or less after 50 rpm in the initial 20 minutes, 30 rpm or less after 50 rpm in the initial 40 min, and 50 rpm in the entire section (80 min). That is, as the time for which the fall motion occurs by rotating the drum at 50 rpm increases, the shrinkage rate also increases proportionally. As a result, if the drum 20 is driven at 30 rpm or less in all the agitating steps (S40), the shrinkage rate of the subject to be dried, which is conventionally about 4 to 5%, may be reduced to 1.5%.

Therefore, according to the present invention, it is possible to reduce the shrinkage of the subject to be dried due to mechanical force by preventing the falling motion of the subject to be dried.

Meanwhile, in the agitating step (S40), the control unit 100 may drive the circulation fan 33 to discharge the wet air present in the drum 20 to the outside. At the same time, the air outside the drum 20 may be introduced into the drum 20.

With this configuration, the water vapor of the subject to be dried can be induced to be evaporated by the air flow. In addition, the overheated anode electrode 41 and the matcher 42 can be cooled by this air flow.

In the agitating step (S40), the control unit 100 may stop the application of RF power for a preset agitating time tm and rotate only the drum 20. For example, the control unit 100 may stop applying the RF power for a time period of 3 seconds or more and 7 seconds or less and rotate only the drum 20, preferably stop the RF power application for a time period of 5 seconds and then rotate only the drum 20.

Meanwhile, the drying step (S30) and the agitating step (S40) are repeated until a preset degree of drying is achieved (S50). In this case, the degree of drying may be determined based on whether or not the load of the subject to be dried has decreased to a preset level based on the load of the subject to be dried in the drying preparation step (S10), and the degree of drying may be determined through temperature change or humidity inside the drum. In addition, it is also possible to determine the degree of drying by calculating the time required for drying in consideration of the applied RF power and the heat capacity for each material of the subject to be dried. For example, the drying step (S30) and the agitating step (S40) may be repeatedly performed 36 times for 1 hour.

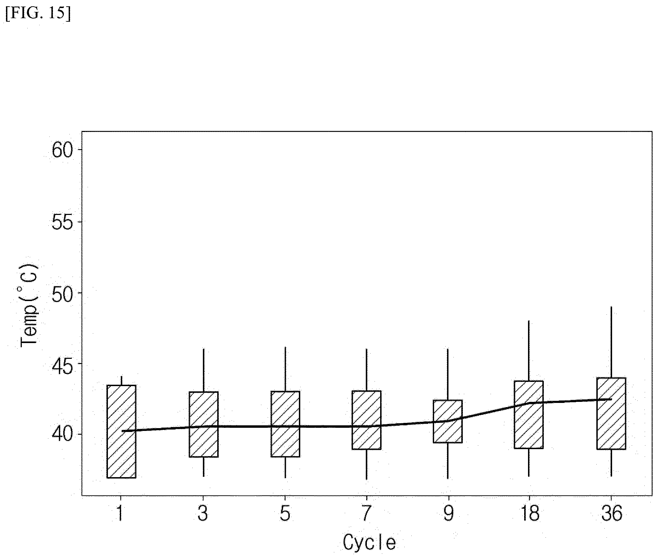

Considering the temperature change of the subject to be dried to which the control method of the laundry drying machine according to the embodiment of the present invention is applied with reference to FIG. 15, the temperature difference from the first cycle to the final 36th cycle is very small, and it can be seen that the temperature is maintained at 50 degrees or less.

Therefore, according to the present invention, the control unit 100 has an effect of maintaining the internal temperature of the subject to be dried at 50 degrees or less to prevent the occurrence of color transfer in the subject to be dried.

Meanwhile, in the cooling step (S60), the control unit 100 cools the subject to be dried when the subject to be dried reaches a preset degree of drying. The cooling refers to a process of drying the subject to be dried by using the circulation fan 33 without operating the electric field generator 40. That is, when the subject to be dried reaches a preset degree of drying, the control unit 100 drives the circulation fan 33 for a predetermined time and rotates the drum 20. Accordingly, the subject to be dried accommodated in the drum 20 is rotated along the drum 20, and the subject to be dried is dried according to the air flow formed by the circulation fan 33.

After the cooling step (S60), the overall drying process of the laundry drying machine according to the embodiment of the present invention is ended.

[Description of Reference Numerals]

1 : laundry drying machine
10 : cabinet
20 : drum
21 : drum body
24 : notch part
25 : lifter
30 : duct part
31 : exhaust duct
33 : circulation fan
33b : impeller motor
40 : electric field generator
41 : anode electrode
42 : matcher
43 : power supply unit
50 : driving unit
51 : drum motor
100 : control unit

**Claims**

1. A laundry drying machine (1) comprising:

   a cabinet (10);
   a drum (20) that is rotatably installed in the cabinet (10) adapted to accommodate a subject to be dried;
   an electric field generator (40) that is spaced apart from the drum (20) and is configured to generate an electric field inside the drum (20) when power is applied; and
   an exhaust duct (31) configured to discharge air inside the drum (20),
   wherein the electric field generator (40) includes:

      an anode electrode (41) that is spaced apart from the drum (20), fixed to the cabinet (10), and is configured to apply the electric field to the subject to be dried accommodated in the drum (20);
      a power supply unit (43) configured to supply the power to the anode electrode (41); and
      a matcher (42), provided in the cabinet (10), configured to match a source impedance of the power and an impedance of a load side,
      **characterized in that** the electric field generator (40) is configured to increase the power applied to the anode electrode (41) when the reflectivity of the electric field is less than or equal to the predetermined ratio, and
      wherein the drum is configured to reduce a rotation speed of the drum (20) when a reflectivity of the electric field exceeds a predetermined ratio.

2. The laundry drying machine (1) according to claim 1,
   wherein the drum is configured to reduce the rotation rate of the drum (20) by 10% when the reflectivity of the electric field exceeds the predetermined ratio.

3. The laundry drying machine (1) according to claim 1 or 2, wherein the electric field generator (40) is configured to apply the power corresponding to a preset start power to the anode electrode (41) when starting to apply the power to the anode electrode (41), and the electric field generator (40) is configured to apply the power corresponding to 20% of a preset drying power when the reflectivity of the electric field is less than or equal to the predetermined ratio, and preferably

      wherein the electric field generator (40) is configured to apply the power corresponding to 50% of the drying power to the anode electrode (41) when the power being applied to the anode electrode (41) corresponds to 20% of the drying power and the reflectivity of the electric field is less than or equal to the predetermined ratio, and
      wherein the electric field generator (40) is configured to apply the power corresponding to 100% of the drying power to the anode electrode (41) when the power being applied to the anode electrode (41) corresponds to 50% of the drying power and the reflectivity of the electric field is less than or equal to the predetermined ratio.

4. The laundry drying machine (1) according to any one of claims 1 to 3, wherein the drum (20) is configured to maintain the rotation speed when a preset drying power is applied to the anode electrode (41) and the reflectivity of the electric field reflected from the subject to be dried is less than or equal to the predetermined ratio.

5. The laundry drying machine (1) according to any one of claims 1 to 4, wherein the drum (20) is configured to rotate when power is applied to the anode electrode (41).

6. A control method of the laundry drying machine (1) according to any one of claims 1 to 5, the control method comprising:

      a drying step (S30) of applying power to the fixed anode electrode and rotating the drum, wherein the power applied to the anode electrode is increased when the reflectivity of the electric field is less than or equal to the predetermined ratio; and
      an agitating step (S40) of cutting off the power applied to the anode electrode and rotating the drum,
      wherein in the drying step (S30), a rotation speed of the drum is reduced when a reflectivity of the electric field exceeds a predetermined ratio.

7. The control method of a laundry drying machine according to claim 6,
   wherein the drying step (S30) includes:

a drying entry step (S31) of applying a preset start power to the anode electrode and rotating the drum at a preset start rotation speed; and

a rotation maintaining step (S39) of applying a preset drying power to the anode electrode and maintaining the rotation speed of the drum.

8. The control method of a laundry drying machine according to claim 7, wherein in the drying step (S30), when the reflectivity of the electric field exceeds the predetermined ratio after the drying entry step (S31), the rotation speed of the drum is reduced.

9. The control method of a laundry drying machine according to claim 7 or 8, wherein the drying step (S30) further includes a first power increasing step (S33) of increasing the power applied to the anode electrode to 20% of the drying power when the reflectivity of the electric field is less than or equal to the predetermined ratio after the drying entry step.

10. The control method of a laundry drying machine according to claim 9, wherein in the drying step (S30), when the reflectivity of the electric field exceeds the predetermined ratio after the first power increasing step (S33), the rotation speed of the drum is reduced.

11. The control method of a laundry drying machine according to claim 9 or 10, wherein the drying step (S30) further includes a second power increasing step (S35) of increasing the power applied to the anode electrode to 50% of the drying power when the reflectivity of the electric field is less than or equal to the predetermined ratio after the first power increasing step.

12. The control method of a laundry drying machine according to claim 11, wherein in the drying step (S30), when the reflectivity of the electric field exceeds the predetermined ratio after the second power increasing step (S35), the rotation speed of the drum is reduced.

13. The control method of a laundry drying machine according to claim 11 or 12, wherein the drying step (S30) further includes a third power increasing step (S37) of increasing the power applied to the anode electrode to 100% of the drying power when the reflectivity of the electric field is less than or equal to the predetermined ratio after the second power increasing step (S35).

14. The control method of a laundry drying machine according to claim 13, wherein in the drying step (S30), when the reflectivity of the electric field exceeds the predetermined ratio after the third power increasing step (S37), the rotation speed of the drum is reduced.

**Patentansprüche**

1. Wäschetrocknungsmaschine (1), die aufweist:

ein Gehäuse (10);
eine Trommel (20), die drehbar in dem Gehäuse (10) eingebaut ist und dazu ausgelegt ist, einen zu trocknenden Gegenstand aufzunehmen;
einen Generator (40) eines elektrisches Felds, der von der Trommel (20) beabstandet ist und konfiguriert ist, ein elektrisches Feld innerhalb der Trommel (20) zu erzeugen, wenn Strom angelegt wird; und
einen Abluftkanal (31), der konfiguriert ist, Luft aus dem Inneren der Trommel (20) auszuleiten,
wobei der Generator (40) des elektrischen Felds aufweist:

eine Anodenelektrode (41), die von der Trommel (20) beabstandet ist, am Gehäuse (10) befestigt ist und konfiguriert ist, das elektrische Feld an den in der Trommel (20) aufgenommenen zu trocknenden Gegenstand anzulegen;
eine Stromversorgungseinheit (43), die konfiguriert ist, die Anodenelektrode (41) mit Strom zu versorgen; und
eine im Gehäuse (10) vorgesehene Abgleichvorrichtung (42), die konfiguriert ist, eine Quellimpedanz des Stroms und eine Impedanz einer Lastseite abzugleichen,
**dadurch gekennzeichnet, dass** der Generator (40) des elektrischen Felds konfiguriert ist, den an die Anodenelektrode (41) angelegten Strom zu erhöhen, wenn die Reflektivität des elektrischen Felds kleiner oder gleich dem vorgegebenen Verhältnis ist, und

wobei die Trommel konfiguriert ist, die Umdrehungzahl der Trommel (20) zu verringern, wenn die Reflektivität des elektrischen Felds ein vorbestimmtes Verhältnis überschreitet.

2. Wäschetrocknungsmaschine (1) nach Anspruch 1, wobei die Trommel konfiguriert ist, die Umdrehungsrate der Trommel (20) um 10% zu verringern, wenn die Reflektivität des elektrischen Felds das vorbestimmte Verhältnis überschreitet.

3. Wäschetrocknungsmaschine (1) nach Anspruch 1 oder 2, wobei der Generator (40) des elektrischen Felds konfiguriert ist, den Strom, der einem voreingestellten Startstrom entspricht, an die Anodenelektrode (41) anzulegen, wenn begonnen wird, den Strom an die Anodenelektrode (41) anzulegen, und der Generator (40) des elektrischen Felds konfiguriert ist, Strom anzulegen, der 20% eines voreingestellten Trocknungsstroms entspricht, wenn die Reflektivität des elektrischen Felds kleiner oder gleich dem vorbestimmten Verhältnis ist, und vorzugsweise

wobei der Generator (40) des elektrischen Felds konfiguriert ist, den Strom, der 50% des Trocknungsstroms entspricht, an die Anodenelektrode (41) anzulegen, wenn der an die Anodenelektrode (41) angelegte Strom 20% des Trocknungsstroms entspricht und die Reflektivität des elektrischen Felds kleiner oder gleich dem vorbestimmten Verhältnis ist, und
wobei der Generator (40) des elektrischen Felds konfiguriert ist, Strom, der 100% des Trocknungsstroms entspricht, an die Anodenelektrode (41) anzulegen, wenn der an die Anodenelektrode (41) angelegte Strom 50% des Trocknungsstroms entspricht und die Reflektivität des elektrischen Felds kleiner oder gleich dem vorgegebenen Verhältnis ist.

4. Wäschetrocknungsmaschine (1) nach einem der Ansprüche 1 bis 3, wobei die Trommel (20) konfiguriert ist, die Umdrehungszahl beizubehalten, wenn ein voreingestellter Trocknungsstrom an die Anodenelektrode (41) angelegt wird und die Reflektivität des von dem zu trocknenden Gegenstand reflektierten elektrischen Felds kleiner oder gleich dem vorgegebenen Verhältnis ist.

5. Wäschetrocknungsmaschine (1) nach einem der Ansprüche 1 bis 4, wobei die Trommel (20) konfiguriert ist, sich zu drehen, wenn Strom an die Anodenelektrode (41) angelegt wird.

6. Steuerungsverfahren für die Wäschetrocknungsmaschine (1) nach einem der Ansprüche 1 bis 5, wobei das Steuerungsverfahren aufweist:

einen Trocknungsschritt (S30) des Anlegens von Strom an die feste Anodenelektrode und des Drehens der Trommel, wobei der an die Anodenelektrode angelegte Strom erhöht wird, wenn die Reflektivität des elektrischen Felds kleiner oder gleich dem vorgegebenen Verhältnis ist; und
einen Schritt (S40) des Hin- und Herbewegens, bei dem die Stromzufuhr zur Anodenelektrode unterbrochen und die Trommel gedreht wird,
wobei im Trocknungsschritt (S30) die Umdrehungszahl der Trommel verringert wird, wenn die Reflektivität des elektrischen Felds ein vorbestimmtes Verhältnis überschreitet.

7. Steuerungsverfahren einer Wäschetrocknungsmaschine nach Anspruch 6, wobei der Trocknungsschritt (S30) aufweist:

einen Trocknungseingangsschritt (S31) des Anlegens einer voreingestellten Startleistung an die Anodenelektrode und des Drehens der Trommel mit einer voreingestellten Startumdrehungszahl; und
einen Schritt des Beibehaltens der Umdrehung (S39), bei dem ein voreingestellter Trocknungsstrom an die Anodenelektrode angelegt und die Drehzahl der Trommel beibehalten wird.

8. Steuerungsverfahren einer Wäschetrocknungsmaschine nach Anspruch 7, wobei im Trocknungsschritt (S30), wenn die Reflektivität des elektrischen Felds das vorbestimmte Verhältnis nach dem Trocknungseingangsschritt (S31) überschreitet, die Umdrehungszahl der Trommel verringert wird.

9. Steuerungsverfahren einer Wäschetrocknungsmaschine nach Anspruch 7 oder 8, wobei der Trocknungsschritt (S30) weiterhin einen ersten Stromerhöhungsschritt (S33) des Erhöhens des an die Anodenelektrode angelegten Stroms auf 20% des Trocknungsstroms aufweist, wenn die Reflektivität des elektrischen Felds nach dem Trocknungseingangsschritt kleiner oder gleich dem vorgegebenen Verhältnis ist.

**10.** Steuerungsverfahren einer Wäschetrocknungsmaschine nach Anspruch 9, wobei im Trocknungsschritt (S30), wenn die Reflektivität des elektrischen Felds das vorbestimmte Verhältnis nach dem ersten Stromerhöhungsschritt (S33) überschreitet, die Umdrehungszahl der Trommel verringert wird.

**11.** Steuerungsverfahren einer Wäschetrocknungsmaschine nach Anspruch 9 oder 10, wobei der Trocknungsschritt (S30) weiterhin einen zweiten Stromerhöhungsschritt (S35) des Erhöhens des an die Anodenelektrode angelegte Stroms auf 50% des Trocknungsstroms aufweist, wenn die Reflektivität des elektrischen Felds nach dem ersten Stromerhöhungsschritt kleiner oder gleich dem vorgegebenen Verhältnis ist.

**12.** Steuerungsverfahren einer Wäschetrocknungsmaschine nach Anspruch 11, wobei im Trocknungsschritt (S30), wenn die Reflektivität des elektrischen Felds das vorbestimmte Verhältnis nach dem zweiten Stromerhöhungsschritt (S35) überschreitet, die Umdrehungszahl der Trommel verringert wird.

**13.** Steuerungsverfahren einer Wäschetrocknungsmaschine nach Anspruch 11 oder 12, wobei der Trocknungsschritt (S30) weiterhin einen dritten Stromerhöhungsschritt (S37) des Erhöhens des an die Anodenelektrode angelegte Strom auf 100% des Trocknungsstroms aufweist, wenn die Reflektivität des elektrischen Felds nach dem zweiten Stromerhöhungsschritt (S35) kleiner oder gleich dem vorgegebenen Verhältnis ist.

**14.** Steuerungsverfahren einer Wäschetrocknungsmaschine nach Anspruch 13, wobei im Trocknungsschritt (S30), wenn die Reflektivität des elektrischen Felds das vorbestimmte Verhältnis nach dem dritten Stromerhöhungsschritt (S37) überschreitet, die Umdrehungszahl der Trommel verringert wird.

**Revendications**

**1.** Sèche-linge (1) comprenant :

un caisson (10) ;
un tambour (20) qui est installé en rotation dans le caisson (10) adapté pour loger un sujet à sécher ;
un générateur de champ électrique (40) qui est espacé du tambour (20) et qui est configuré pour générer un champ électrique à l'intérieur du tambour (20) quand une puissance est appliquée ; et
un conduit d'échappement (31) configuré pour évacuer de l'air à l'intérieur du tambour (20),
dans lequel le générateur de champ électrique (40) inclut :

une électrode anodique (41) qui est espacée du tambour (20), fixée sur le caisson (10), et qui est configurée pour appliquer le champ électrique sur le sujet à sécher logé dans le tambour (20) ;
une unité d'alimentation de puissance (43) configurée pour alimenter la puissance à l'électrode anodique (41) ; et
un adaptateur (42), prévue dans le caisson (10), configuré pour adapter une impédance de source de la puissance et une impédance d'un côté charge,
**caractérisé en ce que** le générateur de champ électrique (40) est configuré pour augmenter la puissance appliquée sur l'électrode anodique (41) quand la réflectivité du champ électrique est inférieure ou égale au ratio prédéterminé, et
dans lequel le tambour est configuré pour réduire une vitesse de rotation du tambour (20) quand une réflectivité du champ électrique dépasse un ratio prédéterminé.

**2.** Sèche-linge (1) selon la revendication 1,
dans lequel le tambour est configuré pour réduire la vitesse de rotation du tambour (20) à raison de 10 % quand la réflectivité du champ électrique dépasse le ratio prédéterminé.

**3.** Sèche-linge (1) selon la revendication 1 ou 2, dans lequel le générateur de champ électrique (40) est configuré pour appliquer la puissance correspondant à une puissance de démarrage prédéfinie sur l'électrode anodique (41) lors d'un démarrage d'une application de la puissance sur l'électrode anodique (41), et le générateur de champ électrique (40) est configuré pour appliquer la puissance correspondant à 20 % d'une puissance de séchage prédéfini quand la réflectivité du champ électrique est inférieure ou égale au ratio prédéterminé, et de préférence

dans lequel le générateur de champ électrique (40) est configuré pour appliquer la puissance correspondant à 50 % de la puissance de séchage sur l'électrode anodique (41) quand la puissance qui est appliquée sur l'électrode

24

anodique (41) correspond à 20 % de la puissance de séchage et que la réflectivité du champ électrique est inférieure ou égale au ratio prédéterminé, et

dans lequel le générateur de champ électrique (40) est configuré pour appliquer la puissance correspondant à 100 % de la puissance de séchage sur l'électrode anodique (41) quand la puissance qui est appliquée sur l'électrode anodique (41) correspond à 50 % de la puissance de séchage et que la réflectivité du champ électrique est inférieure ou égale au ratio prédéterminé.

4. Sèche-linge (1) selon l'une quelconque des revendications 1 à 3, dans lequel le tambour (20) est configuré pour maintenir la vitesse de rotation quand une puissance de séchage prédéfinie est appliquée sur l'électrode anodique (41) et que la réflectivité du champ électrique réfléchi depuis le sujet à sécher est inférieure ou égale au ratio prédéterminé.

5. Sèche-linge (1) selon l'une quelconque des revendications 1 à 4, dans lequel le tambour (20) est configuré pour être mis en rotation quand une puissance est appliquée sur l'électrode anodique (41).

6. Procédé de commande du sèche-linge (1) selon l'une quelconque des revendications 1 à 5, le procédé de commande comprenant :

une étape de séchage (S30) consistant à appliquer une puissance sur l'électrode anodique fixe et à mettre en rotation le tambour, la puissance appliquée sur l'électrode anodique étant augmentée quand la réflectivité du champ électrique est inférieure ou égale au ratio prédéterminé ; et
une étape d'agitation (S40) consistant à couper la puissance appliquée sur l'électrode anodique et à mettre en rotation le tambour,
dans lequel, dans l'étape de séchage (S30), une vitesse de rotation du tambour est réduite quand une réflectivité du champ électrique dépasse un ratio prédéterminé.

7. Procédé de commande d'un sèche-linge selon la revendication 6,
dans lequel l'étape de séchage (S30) inclut :

une étape d'entrée de séchage (S31) consistant à appliquer une puissance de démarrage prédéfinie sur l'électrode anodique et à mettre en rotation le tambour à une vitesse de rotation de démarrage prédéfinie ; et
une étape de maintien de rotation (S39) consistant à appliquer une puissance de séchage prédéfinie sur l'électrode anodique et à maintenir la vitesse de rotation du tambour.

8. Procédé de commande d'un sèche-linge selon la revendication 7, dans lequel, dans l'étape de séchage (S30), quand la réflectivité du champ électrique dépasse ratio prédéterminé après l'étape d'entrée de séchage (S31), la vitesse de rotation du tambour est réduite.

9. Procédé de commande d'un sèche-linge selon la revendication 7 ou 8, dans lequel l'étape de séchage (S30) inclut en outre une première étape d'augmentation de puissance (S33) consistant à augmenter la puissance appliquée sur l'électrode anodique à 20 % de la puissance de séchage quand la réflectivité du champ électrique est inférieure ou égale ou ratio prédéterminé après l'étape d'entrée de séchage.

10. Procédé de commande d'un sèche-linge selon la revendication 9, dans lequel, dans l'étape de séchage (S30), quand la réflectivité du champ électrique dépasse le ratio prédéterminé après la première étape d'augmentation de puissance (S33), la vitesse de rotation du tambour est réduite.

11. Procédé de commande d'un sèche-linge selon la revendication 9 ou 10, dans lequel l'étape de séchage (S30) inclut en outre une deuxième étape d'augmentation de puissance (S35) consistant à augmenter la puissance appliquée sur l'électrode anodique à 50 % de la puissance de séchage quand la réflectivité du champ électrique est inférieure ou égale au ratio prédéterminé après la première étape d'augmentation de puissance.

12. Procédé de commande d'un sèche-linge selon la revendication 11, dans lequel, dans l'étape de séchage (S30), quand la réflectivité du champ électrique dépasse le ratio prédéterminé après la deuxième étape d'augmentation de puissance (S35), la vitesse de rotation du tambour est réduite.

13. Procédé de commande d'un sèche-linge selon la revendication 11 ou 12, dans lequel l'étape de séchage (S30) inclut en outre une troisième étape d'augmentation de puissance (S37) consistant à augmenter la puissance appliquée sur l'électrode anodique à 100 % de la puissance de séchage quand la réflectivité du champ électrique est inférieure ou égale au ratio prédéterminé après la deuxième étape d'augmentation de puissance (S35).

14. Procédé de commande d'un sèche-linge selon la revendication 13, dans lequel, dans l'étape de séchage (S30), quand la réflectivité du champ électrique dépasse le ratio prédéterminé après la troisième étape d'augmentation de puissance (S37), la vitesse de rotation du tambour est réduite.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

```
                        ┌──────────┐
                        │  start   │
                        └────┬─────┘
                             │
                             ▼
          ┌──────────────────────────────────┐
   S10 ───│      drying preparation step      │
          └──────────────────┬───────────────┘
                             │
                             ▼
          ┌──────────────────────────────────┐
   S20 ───│         load sensing step         │
          └──────────────────┬───────────────┘
                             │
                             ▼
          ┌──────────────────────────────────┐
   S30 ───│           drying step            │◄──────┐
          └──────────────────┬───────────────┘       │
                             │                        │
                             ▼                        │
          ┌──────────────────────────────────┐       │
   S40 ───│          agitating step           │       │
          └──────────────────┬───────────────┘       │
                             │                        │
                             ▼                        │
         ╱────────────────────────────────────╲  No  │
   S50 ──⟨  Is predetermined degree            ⟩─────┘
         ╲   of drying reached                 ╱
          ╲──────────────────┬────────────────╱
                        Yes  │
                             ▼
          ┌──────────────────────────────────┐
   S60 ───│           cooling step            │
          └──────────────────┬───────────────┘
                             │
                             ▼
                        ┌──────────┐
                        │   end    │
                        └──────────┘
```

[FIG. 14]

[FIG. 15]

[FIG. 16]

```
                            ┌─────────────┐
                            │    start    │
                            └──────┬──────┘
                                   ▼
         ┌──────────────────────────────────────────┐
    S31 ─┤  application of start power Pi,           │
         │  Rotation at start rotation speed Wi      │
         └──────────────────┬───────────────────────┘
                            ▼◄──────────────────────────────────┐
    S32 ─◄ reflectivity of 5% or less ►──►┌──────────────────┐  │
                            │             │ 10% reduction in RPM │─ S32a
                            ▼             └──────────────────┘
         ┌──────────────────────────────────────────┐
    S33 ─┤  application of 20% of drying power Pd    │
         └──────────────────┬───────────────────────┘
                            ▼◄──────────────────────────────────┐
    S34 ─◄ reflectivity of 5% or less ►──►┌──────────────────┐  │
                            │             │ 10% reduction in RPM │─ S34a
                            ▼             └──────────────────┘
         ┌──────────────────────────────────────────┐
    S35 ─┤  application of 50% of drying power Pd    │
         └──────────────────┬───────────────────────┘
                            ▼◄──────────────────────────────────┐
    S36 ─◄ reflectivity of 5% or less ►──►┌──────────────────┐  │
                            │             │ 10% reduction in RPM │─ S36a
                            ▼             └──────────────────┘
         ┌──────────────────────────────────────────┐
    S37 ─┤  application of 100% of drying power Pd   │
         └──────────────────┬───────────────────────┘
                            ▼◄──────────────────────────────────┐
    S38 ─◄ reflectivity of 5% or less ►──►┌──────────────────┐  │
                            │             │ 10% reduction in RPM │─ S38a
                            ▼             └──────────────────┘
         ┌──────────────────────────────────────────┐
    S39 ─┤  application of 100% of drying power Pd   │
         │  Rotation at final calibrated rotation speed │
         └──────────────────┬───────────────────────┘
                            ▼
                    ┌─────────────┐
                    │     end     │
                    └─────────────┘
```

[FIG. 17]

**REFERENCES CITED IN THE DESCRIPTION**

**Patent documents cited in the description**

- US 2013219737 A1
- US 8826561 B2
- US 9200402 B2
- US 9447537 B2
- KR 20180085201 A
- KR 20070056287 A